(19) **Europäisches Patentamt European Patent Office Office européen des brevets**

(11) **EP 2 575 292 B1**

(12) **EUROPEAN PATENT SPECIFICATION**

(45) Date of publication and mention
of the grant of the patent:
**01.06.2016 Bulletin 2016/22**

(51) Int Cl.:
***H04L 12/24*** (2006.01)   ***H04L 29/08*** (2006.01)
***H04L 29/06*** (2006.01)

(21) Application number: **12008673.1**

(22) Date of filing: **24.12.2008**

(54) **Terminal, server, terminal management method, and terminal capability information reporting method**

ENDGERÄT, SERVER, VERFAHREN ZUR VERWALTUNG DES TERMINALS UND VERFAHREN ZUR MELDUNG VON INFORMATION ÜBER EIGENSCHAFTEN DES ENDGERÄTS

TERMINAL, SERVEUR, PROCÉDÉ POUR GÉRER LEDIT TERMINAL ET PROCÉDÉ POUR RAPPORTER DES INFORMATIONS DE CAPACITÉ RELATIVES À CE TERMINAL

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.12.2007 CN 200710306388**
**24.12.2008 EP 08871373**

(43) Date of publication of application:
**03.04.2013 Bulletin 2013/14**

(62) Document number(s) of the earlier application(s) in accordance with Art. 76 EPC:
**08871373.0 / 2 222 024**

(73) Proprietor: **Huawei Technologies Co., Ltd.**
**Longgang District**
**Shenzhen, Guangdong 518129 (CN)**

(72) Inventors:
• **Yang, Jian**
  **518129 Guangdong (CN)**

• **Chen, Guoqiao**
  **518129 Guangdong (CN)**
• **Dong, Ting**
  **518129 Guangdong (CN)**
• **Wang, Lei**
  **518129 Guangdong (CN)**
• **FAN, Shunan**
  **518129 Guangdong (CN)**
• **Zhang, Huiping**
  **518129 Guangdong (CN)**

(74) Representative: **Thun, Clemens et al**
**Mitscherlich PartmbB**
**Patent- und Rechtsanwälte**
**Sonnenstraße 33**
**80331 München (DE)**

(56) References cited:
**EP-A1- 1 758 300    WO-A1-2005/027460**
**US-A1- 2006 179 115**

**Description**

FIELD OF THE INVENTION

The present invention relates to a Push service technology, and in particular, to a terminal management method in the Push service, a terminal capability information reporting method in the Push service, a terminal that supports the Push service, and a server that supports the Push service.

BACKGROUND

The Session Initiation Protocol (SIP) Push service encapsulates Push Over The Air (OTA) protocol contents into a SIP message, and uses the existing SIP/Internet Protocol (IP) core network to transmit the SIP message. The OTA-SIP technology for implementing the Push service is characterized by low cost of maintenance, high interoperability, efficient use of the existing network resources, and good integration with the future All-IP network environment.

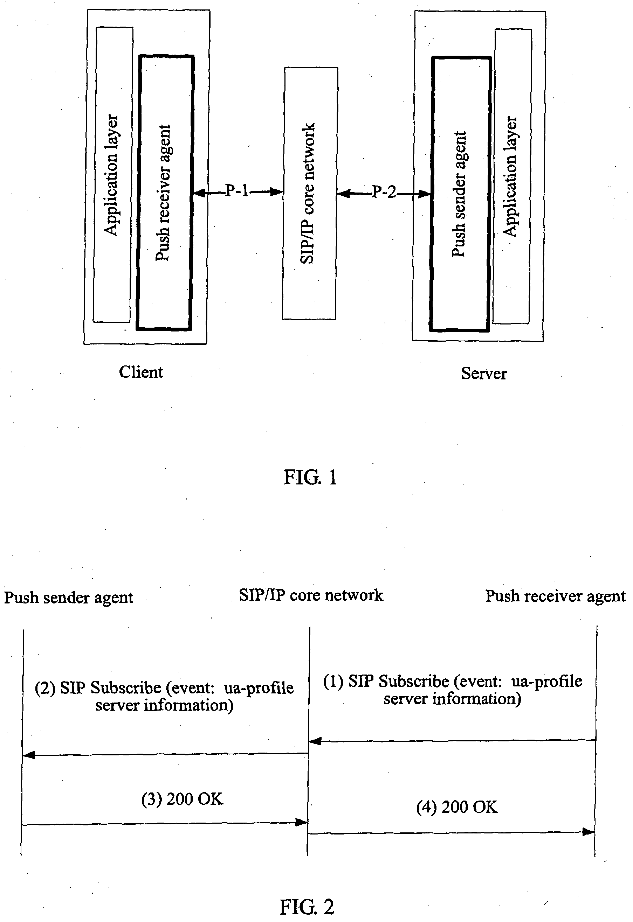

FIG. 1 shows an exemplary model of SIP Push service architecture. In this architecture, a Push sender agent and a Push receiver agent are introduced. The Push sender agent and the Push receiver agent are functional modules that serve as SIP/IP core network access points. As shown in FIG. 1, the Push sender agent is located on the server side, for example, located in a Push Proxy Gateway (PPG); and the Push receiver agent is located on the client side, namely, on the Push client side. P-1 and P-2 are reference points. The P-1 reference point supports communication between the Push receiver agent and the SIP/IP core network, and P-2 reference point supports communication between the Push sender agent and the SIP/IP core network.

Before carrying out a service (for example, before initiating a service to the terminal), a server needs to know the terminal capability information so that the server can send correct service information to the terminal according to the terminal capability information. In this regard, US 2006/179115 A1 discloses a method providing control of push operations in a communication system. The method includes requesting capabilities information associated with a communication device. The capabilities information includes an indication of at least one push method supported by the communication device, wherein the capabilities information may be stored as a part of presence information relating to a user of the communication device.

Currently, the server obtains and manages the terminal capability information primarily through reporting by the terminal. The terminal may report its capability information to the PPG in the subscription process. In the SIP Push, the terminal uses the SIP Subscribe message and the SIP Notify message to subscribe for services, and such messages carry the terminal capability information. Such a process may be implemented through a user agent (ua) profile event package of the Subscribe message. As shown in FIG. 2, the process includes the following steps:

Step 1: The terminal sends a Subscribe request to the SIP/IP core network. The request carries a ua profile event package, namely, terminal capability information.
Step 2: After receiving the Subscribe request, the SIP/IP core network forwards the Subscribe request to the Push sender agent.
Step 3: After receiving the Subscribe request, the Push sender agent handles the service subscription information and the terminal capability information, for example, requests to obtain the terminal capability information from the ua profile and stores the terminal capability information directly. Afterward, the Push sender agent sends a 200 OK response to the SIP/IP core network.
Step 4: The SIP/IP core network forwards the 200 OK response to the Push receiver agent.

Through the foregoing process in the conventional art, the terminal reports its capability information to the server. There are at least the following problems in the conventional art: After the terminal reports its capability information, the terminal capability information may be changed, for example, the software in the terminal is upgraded. In this case, the server is unable to update the terminal capability information if the terminal subscribes for no service. For lack of the latest terminal capability information, the service content which is delivered by the server to the terminal does not match the terminal capabilities, and the service cannot be performed normally.

SUMMARY

The embodiments of the present invention provide a terminal management method in the Push service, and a Push sender agent that supports the Push service, to ensure that the server can carry out services according to the latest terminal capability information.

The terminal management method in the Push service in an embodiment of the present invention includes:

by a Push sender agent, sending a terminal capability information request to a terminal; and
receiving terminal capability information returned by the terminal, and managing terminal capability according to the terminal capability information;

wherein the terminal capability information request specifies a format of returning the terminal capability information and the returned terminal capability information complies with the format;
and wherein the specified format may be:

user agent-profile (ua-profile), User-Agent, or message body; and

a) if the terminal capability information is reported by the terminal in the ua-profile format, the managing of the terminal capability according to the terminal capability information comprises: interacting with a profile server according to the ua-profile reported by the terminal, obtaining corresponding terminal capability information stored in the profile server, and storing the obtained terminal capability information, or updating terminal capability information stored locally according to the obtained terminal capability information; and
b) if the terminal capability information is reported by the terminal in the User-Agent format or the message body format, the managing of the terminal capability according to the terminal capability information comprises: storing the reported terminal capability information, or updating the terminal capability information stored locally according to the reported terminal capability information.

A Push sender agent that supports a Push service in an embodiment of the present invention includes:

a sending module, adapted to send a terminal capability information request to a terminal;
a receiving module, adapted to receive terminal capability information returned by the terminal according to the request; and
a terminal managing module, adapted to manage terminal capability according to the received terminal capability information;

wherein the terminal capability information request specifies a format of returning the terminal capability information and the returned terminal capability information complies with the format;
and wherein the specified format may be:

user agent-profile (ua-profile), User-Agent, or message body; and

a) if the terminal capability information is reported by the terminal in the ua-profile format, the Push sender agent is adapted to interact with a profile server according to the ua-profile reported by the terminal, obtain corresponding terminal capability information stored in the profile server, and store the obtained terminal capability information, or update terminal capability information stored locally according to the obtained terminal capability information; and
b) if the terminal capability information is reported by the terminal in the User-Agent format or the message body format, the Push sender agent is adapted to store the reported terminal capability information, or update the terminal capability information stored locally according to the reported terminal capability information.

The foregoing solution under the present invention reveals that in the Push service, the Push sender agent sends a request for obtaining terminal capability information from the terminal, or the terminal initiates update of the capability information to the Push sender agent proactively after its capability information is changed. Therefore, the server can obtain the current terminal capability information in time, and can carry out services according to the latest terminal capability information.

BRIEF DESCRIPTION OF THE DRAWINGS

FIG. 1 shows an exemplary model of SIP Push service architecture;
FIG. 2 is a flowchart of a server obtaining terminal capability information in the conventional art;
FIG. 3 is a flowchart of the first method embodiment of the present invention;
FIG. 4 is a flowchart of the second method embodiment of the present invention;
FIG. 5 is a flowchart of the third method embodiment of the present invention;

FIG. 6 shows a structure of a server in the first embodiment of the present invention;

FIG. 7 shows another structure of a server in the first embodiment of the present invention;

FIG. 8 shows a structure of a server in the second embodiment of the present invention;

FIG. 9 shows a structure of a terminal in the first embodiment of the present invention;

FIG. 10 shows another structure of a terminal in the first embodiment of the present invention;

FIG. 11 shows another structure of a terminal in the first embodiment of the present invention;

FIG. 12 shows a fourth structure of a terminal in the first embodiment of the present invention; and

FIG. 13 shows a structure of a terminal in the second embodiment of the present invention.

DETAILED DESCRIPTION OF THE EMBODIMENTS

In order to make the technical solution, objectives and merits of the present invention clearer, the following describes the embodiments of the present invention in more detail with reference to accompanying drawings.

In the Push service, the server may send a terminal capability information request to the terminal according to the service requirements, or the terminal updates its capability information to the server automatically, or the capability information is updated through a third party. Supposing that the present invention is applied to the SIP Push service, the embodiments of the present invention are elaborated below.

The whole service is carried in a SIP Push environment. Therefore, the terminal capability information is managed through SIP messages. Here the SIP message may be an Options message, Subscribe message, or Notify message.

If the capability information is managed through a query request from the server, after receiving the query request, the terminal may decide whether to send relevant capability information according to the set policy, and select the terminal capability information to be sent according to the query request. Afterward, the terminal sends its capability information to the server through a SIP message or another message.

Alternatively, after the capability information is changed, the terminal sends updated capability information to the specified server proactively according to the setting of the server. The server may subscribe for the terminal capability update event, and the terminal triggers the corresponding action according to the event.

In the embodiments of the present invention, the terminal may initiate capability update proactively after its capability information is changed, and report the updated terminal capability information to the server. Specifically, the update may be implemented through a SIP Info message or an Update message. The message carries the updated terminal capability information in the same way as reporting the updated terminal capability information in the following embodiments. Because the update is initiated by the terminal proactively, the user enjoys better experience.

The present invention is elaborated below through detailed embodiments.

First, three preferred embodiments are given below to expound a terminal management method in a SIP Push service. In the following preferred embodiments of the method, it is assumed that the entity for processing the terminal capability information on the server side is a Push sender agent and the entity for processing the terminal capability information on the terminal side is a Push receiver agent.

First Embodiment

This embodiment provides a solution to the server managing terminal capability in a SIP Push environment. In this embodiment, when the Push sender agent needs to carry out a service, no terminal capability information is stored locally, or the locally stored terminal capability information is incomplete to this service. In order to carry out the service more appropriately, the Push sender agent needs to query the terminal capability. The Push sender agent constructs a SIP Options request, and sends it to the Push receiver agent through a SIP/IP core network. After receiving the Options request, the Push receiver agent makes a response.

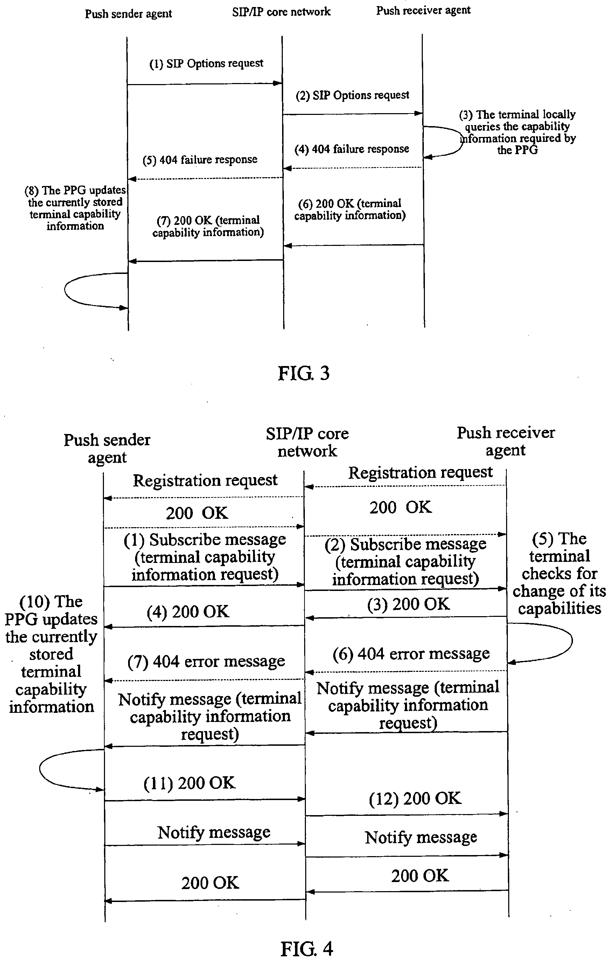

As shown in FIG. 3, the process in this embodiment includes the following steps:

Step 1: The Push sender agent constructs and sends a SIP Options request to the SIP/IP core network. The SIP Options request is shown in Table 1:

Table 1

| |
|---|
| OPTIONS sip:receiver_agent@home.net SIP/2.0 |
| Via: SIP/2.0/UDP sender_agent@home.net;branch=z9hG4bK240f34.1 |
| Max-Forwards: 70 |
| Privacy: none |
| From: <sip:sender_agent@home.net>;tag=31415 |
| To: <sip:receiver_agent@home.net> |

(continued)

| |
| --- |
| Call-ID: dre36d2v32gnlgiiomm72445 |
| CSeq: 61 OPTIONS |
| Event: ua-profile |
| Expires: 600000 |
| Accept: application/ua-profile+xml |
| Contact: <sip:sender_agent@home.net> |
| Content-Length: 0 |

In Table 1, the Push sender agent inputs the address of the receiver agent in the "To" line, namely, in the requested party address (Request-URI) of SIP, and inputs "ua-profile" in the "Event" line to indicate the need of querying the terminal capability information. If necessary, the server may add the existing user terminal capability information in the message body and deliver it to the terminal, or deliver the obtained capability information to the terminal in a User-Agent mode. The server may construct a capability query header field such as CapReport header field, and put this header field into an Options query request to request the terminal to report capability information.

The format of CapReport may be:

$$CapReport = full\ /\ differ\ /customize\ /\ none$$

If CapReport = full, the server requests the terminal to report all capability information. If CapReport = differ, the server may send an xml file of ua-profile to the terminal through an Options request. The terminal compares its capability with the xml file, namely, judges the difference between its capability information and the capability information delivered by the server, and reports the difference to the server. If CapReport = customize, the server may leave blanks in the delivered xml file for the terminal to input contents, and the terminal fills the blanks in the xml file and sends the file back to the server. If CapReport = none, no reporting of this header field is required.

The header field extension mentioned above is only a possible implementation mode. For consistency, we still use "even" to mark the query action to be performed.

In Table 1 above, the terminal capability information is requested by the server through "ua-profile". "ua-profile" identifies a mode of identifying and storing the terminal capability information. Currently, the terminal capability information of SIP Push may be identified and stored in two other modes. The three modes of identification and storage are detailed below:

1: User Agent: User Agent must include the model, terminal software version, and preferably include the player name and the player version. The format of User Agent may comply with "Mobile Terminal WAP 2.0 Technical Specifications" promulgated by China Mobile. Each data unit is delimited by "/". The manufacturer may add properties of other terminals, and the properties are also delimited by "/". The maximum length needs to comply with "Mobile Terminal WAP 2.0 Technical Specifications" promulgated by China Mobile, and the maximum total field length is 255 characters.

Example: "manufacturer name/model/terminal software version/player name and version (recommended)"

2. ua-profile: User Agent Profile (ua-profile) is designed to store user parameters and device function information. Through the received "ua-profile", the terminal sends the capability information address (URL) stored on the profile server to the server, and the server queries the terminal capability according to the URL provided by the terminal.

3. Message body: The terminal capability information is described in the message body. An optional mode is that: The terminal capability information is described through XML language, then the capability information is carried in the message body, and finally the message body is sent to the server. For example, the message body may be in a Resource Description Framework (RDF) format. The terminal capability information may be stored in the database in an RDF format.

Step 2: The SIP/IP core network forwards the Options message to the receiver agent. The format of the forwarded Options message is shown in Table 2:

Table 2

| |
| --- |
| OPTIONS sip:receiver_agent@home.net SIP/2.0 |
| Via: SIP/2.0/UDP sender_agent@home.net;branch=z9hG4bK240f34.1 |

(continued)

> Via: SIP/2.0/UDP scscf.home.net;branch=z9hG4bKnashds7
> Max-Forwards: 70
> P-Asserted-Identity: <sip:scscf.home.net>
> Privacy: none
> From: <sip:sender_agent@home.net>;tag=31415
> To: <sip:receiver_agent@home.net>
> Call-ID: dre36d2v32gnlgiiomm72445
> CSeq: 61 OPTIONS
> Event: ua-profile
> Expires: 600000
> Accept: application/ua-profile+xml
> Contact: <sip:sender_agent@home.net>
> Content-Length: 0

The Push receiver agent is connected with the Push sender agent through the SIP/IP core network. After receiving the SIP message sent to the Push receiver agent, the SIP/IP core network can forward the SIP Options request to the corresponding terminal in the format shown in Table 2 according to the specific conditions. If the user has multiple terminals which are all registered on the server, the SIP/IP core network may query the terminals concurrently or in a fork mode, depending on the setting on the SIP/IP core network, and then report the query result to the server.

Step 3: The terminal processes the Options request locally.

After receiving the Options request from the server, the terminal resolves the SIP message, and judges whether to allow reporting of the terminal capability information according to the content involved in the SIP message and the local policy of the terminal. If the terminal provides the capability specified in the Options request and the local policy allows reporting of such capability information, the terminal responds by sending a 200 OK message in step 6. If the terminal does not provide the capability specified in the Options request, or if the local policy does not allow reporting of such capability information, the terminal returns a 4xx message as error information in step 4.

The capability information returned by the terminal in response to the Options request may be carried in a SIP header field, or in a SIP message body. If the capability information is carried in a SIP header field, the capability information is carried in a ua-profile or User-Agent mode. If the capability information is carried in a SIP message body, the capability information may be listed in the message body, and optionally, an XML file is used to describe the terminal capabilities and is transmitted to the server through the SIP message body.

Step 4: If the terminal is unable to provide the capability information required by the PPG, the terminal returns a 404 Not Found response.

Table 3

> SIP/2.0 404 NotFound
> Via: SIP/2.0/UDP receiver_agent@home.com;branch=z9hG4bK240f34.1
> P-Asserted-Identity: <sip:scscf.home.net>
> Privacy: none
> From: <sip:receiver_agent@home.com>;tag=1928301774
> To: < sip:sender_agent@home.com>;tag=31415
> Call-ID: dre36d2v32gnlgiiomm72445
> CSeq: 61 OPTIONS
> Contact: <sip:receiver_agent@home.com>
> Expires: 600000
> Allow: INVITE, ACK, CANCEL, OPTIONS, BYE
> Accept: application/ua-profile+xml
> Accept-Encoding: gzip
> Accept-Language: en
> Supported: foo
> Content-Length: 0

In the SIP technology, a "4xx" response represents client error. In this example, if a terminal capability required by the server is not available from the client, or if the local policy does not allow reporting of such capability information, the client needs to return error information to the server to terminate the capability query request. "404 Not Found" is an example of a SIP 4xx message. In this example, "404" is used as an error code in response to the query request. In practice, other codes may be returned as a response.

Step 5: After receiving the response from the terminal, the SIP/IP core network forwards it to the Push sender agent. The Push sender agent receives the 404 Not Found response from the terminal, and stops querying the terminal capabilities.

The 404 Not Found response forwarded by the SIP/IP core network to the Push sender agent is shown in Table 4:

Table 4

| SIP/2.0 404 Not Found |
| --- |
| Via: SIP/2.0/UDP scscf.home.net;branch=z9hG4bK871y12.1, |
| Via: SIP/2.0/UDP receiver_agent@home.com;branch=z9hG4bK240f34.1 |
| P-Asserted-Identity: <sip:scscf.home.net> |
| Privacy:none |
| From: <sip:receiver_agent@home.com>;tag=1928301774 |
| To: < sip:sender_agent@home.com>;tag=31415 |
| Call-ID: dre36d2v32gnlgiiomm72445 |
| CSeq: 61 OPTIONS |
| Contact: <sip:receiver_agent.home.net> |
| Expires: 600000 |
| Allow: INVITE, ACK, CANCEL, OPTIONS, BYE |
| Accept: application/ua-profile+xml |
| Accept-Encoding: gzip |
| Accept-Language: en |
| Supported: foo |
| Content-Length: 0 |

The "4xx" above is a response returned when the terminal is unable to respond to the Options query request of the server correctly.

Step 6: The terminal sends a 200 OK response, and reports the capability information requested by the server. The 200 OK message sent by the terminal is shown in Table 5:

Table 5

| SIP/2.0.200 OK |
| --- |
| Via: SIP/2.0/UDP receiver_agent@home.com;branch=z9hG4bK240f34.1 |
| P-Asserted-Identity: <sip:scscf.home.net> |
| Privacy:none |
| From: <sip:receiver_agent@home.com>;tag=1928301774 |
| To: < sip:sender_agent@home.com>;tag=31415 |
| Call-ID: dre36d2v32gnlgiiomm72445 |
| CSeq: 61 OPTIONS |
| Contact: <sip:receiver_agent.home.net> |
| Expires: 600000 |
| Allow: INVITE, ACK, CANCEL, OPTIONS, BYE |
| Accept: application/ua-profile+xml |
| Accept-Encoding: gzip |
| Accept-Language: en |
| Supported: foo |
| Content-Length: 0 |

In the SIP technology, a "2xx" response indicates a success result. In this example, if a terminal capability information required by the server is available from the client, and the local policy allows reporting of such capability information, the client may return a success response to the server. The 200 OK response carries the capability information requested.

Step 7: The Push sender agent receives the 200 OK message that carries the capability information from the SIP/IP core network. The 200 OK message sent by the SIP/IP core network to the Push sender agent is shown in Table 6:

Table 6

```
SIP/2.0 200 OK
Via: SIP/2.0/UDP scscf.home.net;branch=z9hG4bK871y12.1,
Via: SIP/2.0/UDP receiver_agent@home.com;branch=z9hG4bK240f34.1
P-Asserted-Identity: <sip:scscf.home.net>
Privacy: none
From: <sip:receiver_agent@home.com>;tag=1928301774
To: < sip:sender_agent@home.com>;tag=31415
Call-ID: dre36d2v32gnlgiiomm72445
CSeq: 61 OPTIONS
Contact: <sip:receiver_agent.home.net>
Expires: 600000
Allow: INVITE, ACK, CANCEL, OPTIONS, BYE
Accept: application/ua-profile+xml
Accept-Encoding: gzip
Accept-Language: en
Supported: foo
Content-Length: 0
```

After receiving the response from the terminal, the SIP/IP core network forwards it to the Push sender agent. The "2xx" above is a response returned when the terminal responds to the Options query request of the server correctly. If the terminal is unable to respond correctly, the terminal returns a 4xx message.

Step 8: The PPG that serves the Push sender agent updates the currently stored terminal capability information.

After receiving the response to the SIP Options request from the terminal, the Push sender agent takes actions, depending on the type of the response. If the response is error information like 4xx, the Push sender agent performs further operations as indicated by the error information. If the response is a success message like 2xx, the PPG that serves the Push sender agent resolves the received message, retrieves the terminal capability information, and updates the currently stored capability information.

In this embodiment, the terminal capability information reported by the terminal to the server complies with the requirements of the server strictly, and the format of the terminal capability information is specified by the server. For example, if the server requires the terminal to provide terminal capability information in the form of User Agent, the terminal provides the terminal capability information in the form of User Agent; if the terminal has no terminal capability information in the form of User Agent, the terminal may provide the terminal capability information in the form of ua-profile URL; if the terminal still has no terminal capability information in the form of ua-profile URL, the terminal may provide the terminal capability information in the form of messages. The terminal needs to provide at least one form of terminal capability information. Otherwise, it is deemed that the terminal is unable to provide its capability information, and the server terminates the query.

The Options message involved in this embodiment is only an example. In practice, the Options message may be replaced with another similar message.

Second Embodiment

In this embodiment, after the terminal is registered successfully, the server sends a Subscribe request to the terminal. The Subscribe request specifies subscription to the event of terminal capability change, and is delivered to the terminal through a SIP/IP core network. After receiving the request, the terminal may use a Notify message to report its capability information to the server, and then the server stores the received terminal capability information. Once the terminal capabilities are changed (for example, the storage capability is changed, or the application capability is changed), the terminal may send a Notify message which carries the changed capability information to the server.

As shown in FIG. 4, in this embodiment, according to technical specifications of SIP Push, the registration message sent in the process of registering the terminal does hot carry the terminal capability information. After completion of registering the terminal, the server triggers the corresponding terminal capability management process. The process includes the following steps:

Step 1: The Push sender agent subscribes to the terminal capability. Specifically, the Push sender agent sends a Subscribe message to the SIP/IP core network. The message is shown in Table 7:

Table 7

| |
|---|
| SUBSCRIBE sip:receiver_agent@home.net SIP/2.0 |
| Via: SIP/2.0/UDP [5555::aaa:bbb:ccc:ddd]:1357;comp=sigcomp;branch=z9hG4bKnashds7 |
| Max-Forwards: 70 |
| Route: <sip:scscf.home.net:7531 ;lr;comp=sigcomp> |
| P-Preferred-Identity: "John Doe" <sip:receiver_agent@home.net> |
| P-Access-Network-Info: 3GPP-UTRAN-TDD; utran-cell-id-3gpp=234151D0FCE11 |
| Privacy: none |
| From: <sip:receiver_agent@home.net>;tag=31415 |
| To: <sip:receiver_agent@home.net> |
| Accept-Contact: *;+g.oma.icsi.push';+ g.oma.iari.push.PushSyncML;;require;explicit |
| Event: ua-profile;profile-type="application" |
| Call-ID: b89rjhnedlrfjflslj40a222 |
| Require: sec-agree |
| Proxy-Require: sec-agree |
| CSeq: 101 SUBSCRIBE |
| Event: ua-profile |
| Expires: 600000 |
| Accept: application/vnd.syncml.ds.notification |
| Security-Verify: ipsec-3gpp; q=0.1; alg=hmac-sha-1-96; spi-c=98765432; |
| spi-s=87654321; port-c=8642; port-s=7531 |
| Contact: <sip:[5555::aaa:bbb:ccc:ddd]:1357;comp=sigcomp> |
| Content-Length: 0 |

The Push sender agent inputs the address of the Push receiver agent into the Request-URI header field of the Subscribe message sent by the SIP/IP core network, and the address specifies the terminal whose capability information is requested. The Event describes the content subscribed to by the Subscribe message. Further, the Subscribe message needs to specify the mode of returning the terminal capability information, and the XML in the Accept field specifies that the terminal capability information needs to be returned through XML messages.

In the SIP header field, the CapReport header field may be extended in the method described in the first embodiment to indicate that the terminal capability needs to be queried and subscribed to.

Step 2: The SIP/IP core network forwards the Subscribe message to the Push receiver agent (terminal). The format of the forwarded Subscribe message is shown in Table 8:

Table 8

| |
|---|
| SUBSCRIBE sip:receiver_agent@home.net SIP/2.0 |
| Via: SIP/2.0/UDP scscf.home.net;branch=z9hG4bK351g45.1 |
| Via: SIP/2.0/UDP [5555::aaa:bbb:ccc:ddd]:1357;comp=sigcomp;branch=z9hG4bKnashds7 |
| Max-Forwards: 69 |
| P-Preferred-Identity: "John Doe" <sip:receiver_agent@home.net> |
| P-Access-Network-Info: 3GPP-UTRAN-TDD; utran-cell-id-3gpp=234151D0FCE11 |
| Privacy: none |
| From: <sip:receiver_agent@home.net>;tag=31415 |
| To: <sip:receiver_agent@home.net> |
| Accept-Contact: *;+g.oma.icsi.push';+ g.oma.iari.push.PushSyncML;;require;explicit |
| Event: ua-profile;profile-type="application" |
| Call-ID: b89rjhnedlrfjflslj40a222 |

(continued)

> Require: sec-agree
> Proxy-Require: sec-agree
> CSeq: 101 SUBSCRIBE
> Event: ua-profile
> Expires: 600000
> Accept: application/vnd.syncml.ds.notification
> Security-Verify: ipsec-3gpp; q=0.1; alg=hmac-sha-1-96; spi-c=98765432; spi-s=87654321; port-c=8642; port-s=7531
> Contact: <sip:[5555::aaa:bbb:ccc:ddd]: 1357;comp=sigcomp>
> Content-Length: 0

The Push receiver agent is connected with the Push sender agent through the SIP/IP core network. After receiving the SIP message sent to the Push receiver agent, the SIP/IP core network may forward the SIP Subscribe request to the Push receiver agent of the corresponding terminal according to the specific conditions. If the user has multiple terminals which are all registered on the server, the SIP/IP core network may subscribe to the terminal capability information concurrently or in a fork mode, depending on the setting on the SIP/IP core network. If the subscription succeeds, a subscription result is returned to the server.

Step 3: After receiving a Subscribe message correctly, the Push receiver agent returns a 200 OK message. The returned 200 OK message is shown in Table 9:

Table 9

> SIP/2.0 200 OK
> Via: SIP/2.0/UDP scscf.home.net;branch=z9hG4bK351g45.1
> Via: SIP/2.0/UDP [5555::aaa:bbb:ccc:ddd]:1357;comp=sigcomp;branch=z9hG4bKnashds7
> Max-Forwards: 70
> P-Preferred-Identity: "John Doe" <sip:receiver_agent@home.net>
> P-Access-Network-Info: 3GPP-UTRAN-TDD; utran-cell-id-3gpp=234151D0FCE11
> Privacy: none
> From: <sip:receiver_agent@home.net>;tag=31415
> To: <sip:receiver_agent@home.net>;tag=151170
> Call-ID: b89rjhnedlrfjflsj40a222
> CSeq: 101 SUBSCRIBE
> Contact: <sip:psadm.home.net>
> Subscription-State: active;expires=600000
> Event: ua-profile
> Allow: INVITE, ACK, CANCEL, OPTIONS, BYE
> Accept: application/vnd.syncml.ds.notification
> Accept-Encoding: gzip
> Accept-Language: en
> Supported: foo
> Content-Type: application/vnd.syncml.ds.notification
> Content-Length: (...)
>
> [SyncML DS notification content]

In the SIP technology, a "2xx" response indicates a success result. In this embodiment, if the client receives the Subscribe message sent by the server and forwarded by the SIP/IP core network, the client may return a success response to the server.

Step 4: The SIP/IP core network forwards the 200 OK response to the Push sender agent. The format of the forwarded 200 OK message is shown in Table 10:

Table 10

```
SIP/2.0 200 OK
Via: SIP/2.0/UDP [5555::aaa:bbb:ccc:ddd]:1357;comp=sigcomp;branch=z9hG4bKnashds7
Max-Forwards: 69
P-Preferred-Identity: "John Doe" <sip:receiver_agent@home.net>
P-Access-Network-Info: 3GPP-UTRAN-TDD; utran-cell-id-3gpp=234151D0FCE11
Privacy: none
From: <sip:receiver_agent@home.net>;tag=31415
To: <sip:receiver_agent@home.net>;tag=151170
Call-ID: b89rjhnedlrfjflslj40a222
CSeq: 101 SUBSCRIBE
Contact: <sip:psadm.home.net>
Subscription-State: active;expires=600000
Event: ua-profile
Allow: INVITE, ACK, CANCEL, OPTIONS, BYE
Accept: application/vnd.syncml.ds.notification
Accept-Encoding: gzip
Accept-Language: en
Supported: foo
Content-Type: application/vnd.syncml.ds.notification
Content-Length: (...)
[SyncML DS notification content]
```

After receiving the response from the terminal, the SIP/IP core network forwards it to the server. The "2xx" above is a response returned when the terminal responds to the Subscribe query request of the server correctly.

Step 5: After receiving the Subscribe request from the server, the terminal resolves the SIP message, and makes a judgment according to the local policy of the terminal. If the terminal can provide its own capability information, and the local policy allows reporting of the capability information, the terminal returns a 2xx message indicating success of subscription, and sends a Notify message which carries the terminal capability information in step 8. Afterward, the terminal checks whether its capability is changed. Once its capability is changed, the terminal sends a Notify message which carries the changed capability information to the server; if the local policy of the terminal does not allow reporting of the capability information, the terminal returns a 4xx message as error information in step 6.

The capability information returned by the terminal in response to the Subscribe request may be carried in a SIP header field, or in a SIP message body. If the capability information is carried in a SIP header field, the capability information is carried in a ua-profile or User-Agent mode. If the capability information is carried in a SIP message body, the capability information may be listed in the message body, and optionally, an XML file is used to describe the terminal capability and is transmitted to the server through the SIP message body.

Step 6: When the subscription fails or the terminal is unable to provide its capability information, the terminal sends a 404 Not Found message to the server, whereupon the server decides whether to subscribe again according to the policy. The 404 Not Found message is shown in Table 11:

Table 11

```
SIP/2.0 404 Not Found
Via: SIP/2.0/UDP scscf.home.net;branch=z9hG4bK351g45.1
Via: SIP/2.0/UDP [5555::aaa:bbb:ccc:ddd]:1357;comp=sigcomp;branch=z9hG4bKnashds7
Max-Forwards: 70
P=Preferred-Identity: "John Doe" <sip:receiver_agent@home.net>
P-Access-Network-Info: 3GPP-UTRAN-TDD; utran-cell-id-3gpp=234151D0FCE11
Privacy: none
From: <sip:receiver_agent@home.net>;tag=31415
To: <sip:receiver_agent@home.net>;tag=151170
Call-ID: b89rjhnedlrfjflslj40a222
CSeq: 101 SUBSCRIBE
```

(continued)

| |
| --- |
| Contact: <sip:psadm.home.net><br>Subscription-State: inactive;expires=0<br>Event: ua-profile<br>Allow: INVITE, ACK, CANCEL, OPTIONS, BYE<br>Accept: application/vnd.syncml.ds.notification<br>Accept-Encoding: gzip<br>Accept-Language: en<br>Supported: foo<br>Content-Length: 0 |

In the SIP technology, a "4xx" response represents client error. In this example, if the client is unable to provide its capability information, or unable to respond to the Subscribe message, or if the local policy does not allow reporting of such capability information, the client needs to return error information to the server to terminate the capability subscription request. "404 Not Found" is an example of a SIP 4xx message. In this example, "404" is used as an error code in response to the query request. In practice, other codes may be returned as a response.

Step 7: The SIP/IP core network forwards the 404 Not Found message indicative of subscription failure to the server. The 404 Not Found message is shown below:

Table 12

| |
| --- |
| SIP/2.0 404 Not Found<br>Via: SIP/2.0/UDP [5555::aaa:bbb:ccc:ddd]:1357;comp=sigcomp;branch=z9hG4bKnashds7<br>Max-Forwards: 69<br>P-Preferred-Identity: "John Doe" <sip:receiver_agent@home.net><br>P-Access-Network-Info: 3GPP-UTRAN-TDD; utran-cell-id-3gpp=234151D0FCE11<br>Privacy: none<br>From: <sip:receiver_agent@home.net>;tag=31415<br>To: <sip:receiver_agent@home.net>;tag=151170<br>Call-ID: b89rjhnedlrfjflslj40a222<br>CSeq: 101 SUBSCRIBE<br>Contact: <sip:psadm.home.net><br>Subscription-State: inactive;expires=0<br>Event: ua-profile<br>Allow: INVITE, ACK, CANCEL, OPTIONS, BYE<br>Accept: application/vnd.syncml.ds.notification<br>Accept-Encoding: gzip<br>Accept-Language: en<br>Supported: foo<br>Content-Length: 0 |

After receiving the response from the terminal, the SIP/IP core network forwards it to the server. The "4xx" above is a response returned when the terminal is unable to respond to the Subscribe request of the server correctly.

Step 8: The terminal sends a Notify message which carries the changed capability information to the SIP/IP core network. The Notify message is shown in Table 13:

Table 13

| |
| --- |
| NOTIFY sip:[5555::aaa:bbb:ccc:ddd]:1357;comp=sigcomp SIP/2.0<br>Via: SIP/2.0/UDP [5555::aaa:bbb:ccc:ddd]:1357;comp=sigcomp;branch=z9hG4bKnashds7<br>Max-Forwards: 70<br>P-Preferred-Identity: "John Doe" <sip:receiver_agent@home.net><br>Route: <sip:scscf.home.net;lr><br>Privacy: none |

(continued)

```
From: <sip:receiver_agent@home.net>;tag=31415
To: <sip:receiver_agent@home.net>;tag=151170
Call-ID: b89rjhnedlrfjflsj40a222
CSeq: 112 NOTIFY
Subscription-State: active;expires=600000
Event: ua-profile
Allow: INVITE, ACK, CANCEL, OPTIONS, BYE
Accept: application/vnd.syncml.ds.notification
Accept-Encoding: gzip
Accept-Language: en
Supported: foo
Content-Type: application/vnd.syncml.ds.notification
Contact: <sip:psadm.home.net>
Content-Length: (...)

[SyncML DS notification content]
```

The terminal may report the capability information to the server through a Notify message immediately after being registered, or report the capability information after the terminal capability information is changed. The Event field in the Notify message indicates that the response is a ua-profile event package, and the Content-Type is the content type specified in the Subscribe message.

Step 9: The SIP/IP core network forwards the Notify message to the server. The format of the forwarded Notify message is shown in Table 14:

Table 14

```
NOTIFY sip:[5555::aaa:bbb:ccc:ddd]:1357;comp=sigcomp SIP/2.0
Via: SIP/2.0/UDP scscf.home.net;branch=z9hG4bK351g45.1
Via: SIP/2.0/UDP [5555::aaa:bbb:ccc:ddd]:1357;comp=sigcomp;branch=z9hG4bKnashds7
Max-Forwards: 69
P-Preferred-Identity: "John Doe" <sip:receiver_agent@home.net>
Privacy: none
From: <sip:receiver_agent@home.net>;tag=31415
To: <sip:receiver_agent@home.net>;tag=151170
Call-ID: b89rjhnedlrfjflslj40a222
CSeq: 112 NOTIFY
Subscription-State: active;expires=600000
Event: ua-profile
Allow: INVITE, ACK, CANCEL, OPTIONS, BYE
Accept: application/vnd.syncml.ds.notification
Accept-Encoding: gzip
Accept-Language: en
Supported: foo
Content-Type: application/vnd.syncml.ds.notification
Contact: <sip:psadm.home.net>
Content-Length: (...)

[SyncML DS notification content]
```

After receiving the Notify message from the terminal, the SIP/IP core network forwards it to the server. In the foregoing example, because the content type of the subscription is XML, the terminal capability information is described in XML. However, the capability information may be described in other forms such as ua-profile URL and User Agent.

The XML format is given as an example here, but it is the same with other formats of the capability information reported.

Step 10: The server updates the currently stored terminal capability information.

In this step, after receiving the capability information from the terminal, the server judges whether the capability information is sent immediately after the terminal is registered. If the capability information is sent immediately after the terminal is registered, because the capability information is not stored on the server previously, the server stores the current terminal capability information, and then performs SIP Push operations such as sending service contents according to the terminal capability information provided by the terminal. If the server has stored the terminal capability information before receiving the Notify response, because the Notify message carries the information which exists after change of the terminal capability information, the server updates the stored terminal capability information.

Step 11: The server sends a Notify 200 OK message to the terminal. The 200 OK message is shown in Table 15:

Table 15

```
SIP/2.0 200 OK
Via: SIP/2.0/UDP scscf.home.net;branch=z9hG4bK351g45.1
Via: SIP/2.0/UDP [5555::aaa:bbb:ccc:ddd]:1357;comp=sigcomp;branch=z9hG4bKnashds7
Max-Forwards: 70
P-Preferred-Identity: "John Doe" <sip:receiver_agent@home.net>
Privacy: none
From: <sip:receiver_agent@home.net>;tag=31415
To: <sip:receiver_agent@home.net>;tag=151170
Call-ID: b89rjhnedlrfjflslj40a222
CSeq: 112 NOTIFY
Contact: <sip:[5555::aaa:bbb:ccc:ddd]:1357;comp=sigcomp>
Allow: INVITE, ACK, CANCEL, OPTIONS, BYE
Accept: application/vnd.syncml.ds.notification
Accept-Encoding: gzip
Accept-Language: en
Supported: foo
Content-Length: 0
```

In the SIP technology, a "2xx" response indicates a success result. In this example, if the server correctly receives the Notify message forwarded by the SIP/IP core network, the server may return a success response to the terminal.

Step 12: The SIP/IP core network forwards the 200 OK response to the terminal. The 200 OK message is shown in Table 16:

Table 16

```
SIP/2.0 200 OK
Via: SIP/2.0/UDP [5555::aaa:bbb:ccc:ddd]:1357;comp=sigcomp;branch=z9hG4bKnashds7
P-Asserted-Identity: <sip:scscf.home.net>
Max-Forwards: 69
P-Preferred-Identity: "John Doe" <sip:receiver_agent@home.net>
Privacy: none
From: <sip:receiver_agent@home.net>;tag=31415
To: <sip:receiver_agent@home.net>;tag=151170
Call-ID: b89rjhnedlrfjflslj40a222
CSeq: 112 NOTIFY
Contact: <sip:[5555::aaa:bbb:ccc:ddd]: 1357;comp=sigcomp>
Allow: INVITE, ACK, CANCEL, OPTIONS, BYE
Accept: application/vnd.syncml.ds.notification
Accept-Encoding: gzip
Accept-Language: en
Supported: foo
```

(continued)

| Content-Length: 0 |
| --- |

After receiving the response from the server, the SIP/IP core network forwards it to the terminal. The "2xx" above is a response returned when the server responds to the Notify message of the terminal correctly.

Once its capability is changed, the terminal reports the changed capability information to the server. The capability information may be reported in the form of User Agent or ua-profile, or other forms of storing the capability information on the terminal. Such forms of reporting the capability information are understandable to the server. The Subscribe/Notify message given above is only an example. It is the same with other messages through which the capability information is reported.

Third Embodiment

In this embodiment, the server may use a third party to manage the terminal capability. For example, if the terminal is unable to report the capability change to the server after the terminal capability is changed, or if the server is unable to obtain the changed terminal capability information, a third party may be used to report the terminal capability information to the SIP/IP core network, and then the SIP/IP core network sends the capability information to the server. In this way, the server manages the terminal capability.

In this embodiment, it is assumed that Push Agent 1 and Push Agent 2 are terminals registered on the SIP/IP core network, and they belong to the same Public URI and are different terminals of one user. In this case, a terminal capable of accessing the SIP/IP core network and storing capability information of other terminals of the user may be selected according to a policy, and this terminal reports the capability information of other terminals to the server. For example, Push receiver agent 1 serves as a third-party terminal that reports the capability information of Push receiver agent 2 to the server. It is assumed that:

The Contact address of Push receiver agent 1 is: [6666::aaa:bbb:ccc:ddd]:1357;
the Contact address of Push receiver agent 2 is: [7777::aaa:bbb:ccc:ddd]:1357; and
the Contact address of the Push sender agent is: sip:[5555::aaa:bbb:ccc:ddd]:1357.

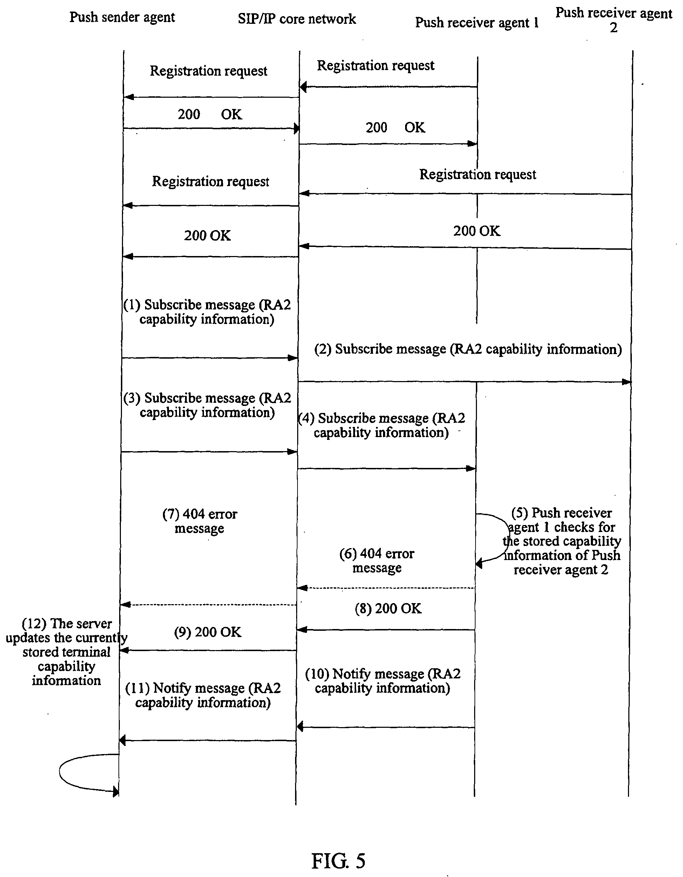

As shown in FIG. 5, the process in this embodiment includes the following steps:

Step 1: The Push sender agent subscribes to the capabilities of Push Receiver Agent 2. First, the Push sender agent sends a Subscribe message to the SIP/IP core network. The Subscribe message is shown in Table 17:

Table 17

| |
| --- |
| SUBSCRIBE sip:receiver_agent@home.net SIP/2.0 |
| Via: SIP/2.0/UDP [5555::aaa:bbb:ccc:ddd]:1357;comp=sigcomp;branch=z9hG4bKnashds7 |
| Max-Forwards: 70 |
| Route: <sip:scscf.home.net:753;lr;comp=sigcomp> |
| Route: <sip:[6666::aaa:bbb:ccc:ddd]:1357;lr;comp=sigcomp> |
| P-Preferred-Identity: "John Doe" <sip:receiver_agent@home.net> |
| P-Access-Network-Info: 3GPP-UTRAN-TDD; utran-cell-id-3gpp=234151D0FCE11 |
| Privacy: none |
| From: <sip:sender_agent@home.net>;tag=31415 |
| To: <sip:receiver_agent@home.net> |
| Accept-Contact: *;+g.oma.icsi.push';+ g.oma.iari.push.PushSyncML;;require;explicit |
| Event: ua-profile;profile-type="application" |
| Call-ID: b89rjhnedlrfjflslj40a222 |
| Require: sec-agree |
| Proxy-Require: sec-agree |
| CSeq: 101 SUBSCRIBE |
| Expires: 600000 |
| Accept: application/vnd.syncml.ds.notification+xml |

(continued)

| |
|---|
| Security-Verify: ipsec-3gpp; q=0.1; alg=hmac-sha-1-96; spi-c=98765432; spi-s=87654321; port-c=8642; port-s=7531 |
| Contact: <sip:[5555::aaa:bbb:ccc:ddd]:1357;comp=sigcomp> |
| Content-Length: 0 |

As shown in the foregoing table, the address of Push receiver agent 2 is input into the Request-URI header field of the Subscribe message to indicate the terminal whose capability information is queried. The Event indicates that the subscribed content is terminal capability information, and specifies that the terminal capability information needs to be returned in the form of ua-profile.

In the SIP header field, the CapReport header field may be extended in the method described in the first embodiment to indicate that the terminal capabilities need to be queried and subscribed to.

Step 2: The SIP/IP core network forwards the Subscribe message to Push receiver agent 2 (terminal 2). The Subscribe message is shown in Table 18:

Table 18

| |
|---|
| SUBSCRIBE sip:[6666::aaa:bbb:ccc:ddd]:1357;lr;comp=sigcomp SIP/2.0 |
| Via: SIP/2.0/UDP scscf.home.net;branch=z9hG4bK351g45.1 |
| Via: SIP/2.0/UDP [5555::aaa:bbb:ccc:ddd]:357;comp=sigcomp;branch=z9hG4bKnashds7 |
| Max-Forwards: 69 |
| P-Preferred-Identity: "John Doe" <sip:receiver_agent@home.net> |
| P-Access-Network-Info: 3GPP-UTRAN-TDD; utran-cell-id-3gpp=234151D0FCE11 |
| Privacy: none |
| From: <sip:sender_agent@home.net>;tag=31415 |
| To: <sip:receiver_agent@home.net> |
| Accept-Contact: *;+g.oma.icsi.push';+ g.oma.iari.push.PushSyncML;;require;explicit |
| Event: ua-profile;profile-type="application" |
| Call-ID: b89rjhnedlrfjflslj40a222 |
| Require: sec-agree |
| Proxy-Require: sec-agree |
| CSeq: 101 SUBSCRIBE |
| Expires: 600000 |
| Accept: application/vnd.syncml.ds.notification |
| Security-Verify: ipsec-3gpp; q=0.1; alg=hmac-sha-1-96; spi-c=98765432; spi-s=87654321; port-c=8642; port-s=7531 |
| Contact: <sip:[5555::aaa:bbb:ccc:ddd]:1357;comp=sigcomp> |
| Content-Length: 0 |

In this step, Push receiver agent 2 is connected with the Push sender agent through the SIP/IP core network. After receiving the SIP message sent to Push receiver agent 2, the SIP/IP core network may forward the SIP Subscribe request to the corresponding terminal according to the specific conditions.

Step 3: The Push sender agent subscribes to capability information from the terminal again, for example, through a Subscribe message. The Subscribe message is shown in Table 19.

Table 19

| |
|---|
| SUBSCRIBE sip:receiver_agent@home.net SIP/2.0 |
| Via: SIP/2.0/UDP [5555::aaa:bbb:ccc:ddd]:1357;comp=sigcomp;branch=z9hG4bKnashds7 |
| Max-Forwards: 70 |
| Route: <sip:scscf.home.net:7531;lr;comp=sigcomp> |
| Route: <sip:[7777::aaa:bbb:ccc:ddd]:1357;lr;comp=sigcomp> |
| P-Preferred-Identity: "John Doe" <sip:receiver_agent@home.net> |
| P-Access-Network-Info: 3GPP-UTRAN-TDD; utran-cell-id-3gpp=234151D0FCE11 |

(continued)

```
Privacy: none
From: <sip:sender_agent@home.net>;tag=31415
To: <sip:receiver_agent@home.net>
Accept-Contact: *;+g.oma.icsi.push';+ g.oma.iari.push.PushSyncML;;require;explicit
Event: ua-profile;profile-type="application"
Call-ID: b89rjhnedlrfjflslj40a222
Require: sec-agree
Proxy-Require: sec-agree
CSeq: 101 SUBSCRIBE
Expires: 600000
Accept: application/vnd.syncml.ds.notification
Security-Verify: ipsec-3gpp; q=0.1; alg=hmac-sha-1-96; spi-c=98765432;
spi-s=87654321; port-c=8642; port-s=7531
Contact: <sip:[5555::aaa:bbb:ccc:ddd]:1357,comp=sigcomp>
Content-Length: 0
```

Before this step, the Push sender agent fails to receive the response to the Subscribe message correctly due to timeout. Therefore, the Push sender agent subscribes to capability information of terminal 2 again according to the policy, and sends the Subscribe message to terminal 1 preferred by the registered user.

Step 4: The SIP/IP core network forwards the Subscribe message to Push receiver agent 1 (terminal 1). The Subscribe message is shown in Table 20:

Table 20

```
SUBSCRIBE sip:[7777::aaa:bbb:ccc:ddd]:1357;lr;comp=sigcomp SIP/2.0
Via: SIP/2.0/UDP scscf.home.net;branch=z9hG4bK351g45.1
Via: SIP/2.0/UDP [5555::aaa:bbb:ccc:ddd]:1357;comp=sigcomp;branch=z9hG4bKnashds7
Max-Forwards: 69
P-Preferred-Identity: "John Doe" <sip:receiver_agent@home.net>
P-Access-Network-Info: 3GPP-UTRAN-TDD; utran-cell-id-3gpp=234151D0FCE11.
Privacy: none
From: <sip:sender_agent@home.net>;tag=31415
To: <sip:receiver_agent@home.net>
Accept-Contact: *;+g.oma.icsi.push';+ g.oma.iari.push.PushSyncML;;require;explicit
Event: ua-profile;profile-type="application"
Call-ID: b89rjhnedlrfjflslj40a222
Require: sec-agree
Proxy-Require: sec-agree
CSeq: 101 SUBSCRIBE
Expires: 600000
Accept: application/vnd.syncml.ds.notification
Security-Verify: ipsec-3gpp; q=0.1; alg=hmac-sha-1-96; spi-c=98765432; spi-s=87654321; port-c=8642; port-s=7531
Contact: <sip:[5555::aaa:bbb:ccc:ddd]:1357;comp=sigcomp>
Content-Length: 0
```

The Push receiver agent 1 is connected with the Push sender agent through the SIP/IP core network. After receiving the SIP message sent to Push receiver agent 1, the SIP/IP core network may forward the SIP Subscribe request to the corresponding terminal (namely, terminal 1) according to the specific conditions.

Step 5: Push receiver agent 1 is a terminal preferred by the user, and stores capability information of other terminals of the user. When the SIP/IP core network sends a Subscribe message to terminal 1 to subscribe to the capability information of terminal 2, Push receiver agent 1 can query the stored capability information of other terminals and judge whether the capability information of Push receiver agent 2 is stored. If terminal 1 stores the terminal capability information required by the server and the information is allowed to be sent to the server, terminal 1 returns a 2xx message indicating success of subscription, and sends a Notify message that carries the stored capability information of terminal 2 to the server. The reported capability information is stored in the same form as the capability information of terminal 2. If terminal 1 finds no terminal capability information required by the server, or if the local policy of terminal 1 does not allow reporting of the terminal capability information required by the server, terminal 1 returns a 4xx message indicating subscription failure. In this example, if the subscription succeeds, the process proceeds to step 8; otherwise, the process proceeds to step 6.

Step 6: Push receiver agent 1 sends a 404 Not Found message to the server. The 404 Not Found message is shown in Table 21:

Table 21

| |
|---|
| SIP/2.0 404 Not Found |
| Via: SIP/2.0/UDP scscf.home.net;branch=z9hG4bK351g45.1 |
| Via: SIP/2.0/UDP [5555::aaa:bbb:ccc:ddd]:1357;comp=sigcomp;branch=z9hG4bKnashds7 |
| Max-Forwards: 70 |
| P-Preferred-Identity: "John Doe" <sip:receiver_agent@home.net> |
| P-Access-Network-Info: 3GPP-UTRAN-TDD; utran-cell-id-3gpp=234151D0FCE11 |
| Privacy: none |
| From: <sip:receiver_agent@home.net>;tag=31415 |
| To: <sip:sender_agent@home.net>;tag=151170 |
| Call-ID: b89rjhnedlrfjflslj40a222 |
| CSeq: 101 SUBSCRIBE |
| Contact: <sip:[6666::aaa:bbb:ccc:ddd]:1357;lr;comp=sigcomp> |
| Subscription-State: inactive;expires=0 |
| Event: ua-profile |
| Allow: INVITE, ACK, CANCEL, OPTIONS, BYE |
| Accept: application/vnd.syncml.ds.notification |
| Accept-Encoding: gzip |
| Accept-Language: en |
| Supported: foo |
| Content-Length: 0 |

In the SIP technology, a "4xx" response represents client error. In this example, if terminal 1 is unable to find the terminal capability information required by the server, or unable to respond to the Subscribe message, or if the local policy does not allow reporting of such capability information, terminal 1 needs to return error information to the server to terminate the capability subscription request. "404 Not Found" is an example of a SIP 4xx message. In this example, "404" is used as an error code in response to the query request. In practice, other codes may be returned as a response.

Step 7: The SIP/IP core network forwards the error information sent by terminal 1 to the server. The forwarded 404 Not Found message is shown in Table 22:

Table 22

| |
|---|
| SIP/2.0 404 Not Found |
| Via: SIP/2.0/UDP [5555::aaa:bbb:ccc:ddd]:1357;comp=sigcomp;branch=z9hG4bKnashds7 |
| Max-Forwards: 69 |
| P-Preferred-Identity: "John Doe" <sip:receiver_agent@home.net> |
| P-Access-Network-Info: 3GPP-UTRAN-TDD; utran-cell-id-3gpp=234151D0FCE11 |
| Privacy: none |
| From: <sip:receiver_agent@home.net>;tag=31415 |
| To: <sip:sender_agent@home.net>;tag=151170 |
| Call-ID: b89rjhnedlrfjflslj40a222 |
| CSeq: 101 SUBSCRIBE |
| Contact: <sip:[6666::aaa:bbb:ccc:ddd]:1357;lr;comp=sigcomp> |

(continued)

| |
|---|
| Subscription-State: inactive;expires=0 |
| Event: ua-profile |
| Allow: INVITE, ACK, CANCEL, OPTIONS, BYE |
| Accept: application/vnd.syncml.ds.notification |
| Accept-Encoding: gzip |
| Accept-Language: en |
| Supported: foo |
| Content-Length: 0 |

After receiving the response from the terminal, the SIP/IP core network forwards the 404 Not Found message to the server. The 4xx message above is a response to the Subscribe request of the server in the case that the terminal is unable to find the terminal capability information required by the server or the local policy does not allow reporting of such capability information.

Step 8: Terminal 1 receives the Subscribe message from the server correctly and finds the terminal capability information required by the server, and returns a 200 OK message. The 200 OK message is shown in Table 23.

Table 23

| |
|---|
| SIP/2.0 200 OK |
| Via: SIP/2.0/UDP scscf.home.net;branch=z9hG4bK351g45.1 |
| Via: SIP/2.0/UDP [5555::aaa:bbb:ccc:ddd]:1357;comp=sigcomp;branch=z9hG4bKnashds7 |
| Max-Forwards: 70 |
| P-Preferred-Identity: "John Doe" <sip:receiver_agent@home.net> |
| P-Access-Network-Info: 3GPP-UTRAN-TDD; utran-cell-id-3gpp=234151D0FCE11 |
| Privacy: none |
| From: <sip:receiver_agent@home.net>;tag=31415 |
| To: <sip:sender_agent@home.net>;tag=151170 |
| Call-ID: b89rjhnedlrfiflslj40a222 |
| CSeq: 101 SUBSCRIBE |
| Contact: <sip: [6666::aaa:bbb:ccc:ddd]:1357;lr;comp=sigcomp> |
| Subscription-State: active;expires=600000 |
| Event: ua-profile |
| Allow: INVITE, ACK, CANCEL, OPTIONS, BYE |
| Accept: application/vnd.syncml.ds.notification |
| Accept-Encoding: gzip |
| Accept-Language: en |
| Supported: foo |
| Content-Type: application/vnd.syncml.ds.notification |
| Content-Length: (...) |
| |
| [SyncML DS notification content] |

In the SIP technology, a "2xx" response indicates a success result. In this example, if the client correctly receives the Subscribe message sent by the server and forwarded by the SIP/IP core network, and finds the capability information required by the server, the client may return a success response to the server.

Step 9: The SIP/IP core network forwards the 200 OK message to the server. The 200 OK message is shown in Table 24:

Table 24

| |
|---|
| SIP/2.0 200 OK |
| Via: SIP/2.0/UDP [5555::aaa:bbb:ccc:ddd]:1357;comp=sigcomp;branch=z9hG4bKnashds7 |
| Max-Forwards: 69 |

(continued)

```
P-Preferred-Identity: "John Doe" <sip:receiver_agent@home.net>
P-Access-Network-Info: 3GPP-UTRAN-TDD; utran-cell-id-3gpp=234151D0FCE11
Privacy: none
From: <sip:receiver_agent@home.net>;tag=31415
To: <sip:sender_agent@home.net>;tag=151170
Call-ID: b89rjhnedlrfjflslj40a222
CSeq: 101 SUBSCRIBE
Contact: <sip: [6666::aaa:bbb:ccc:ddd]:1357;lr;comp=sigcomp>
Subscription-State: active;expires=600000
Event: ua-profile
Allow: INVITE, ACK, CANCEL, OPTIONS, BYE
Accept: application/vnd.syncml.ds.notification
Accept-Encoding: gzip
Accept-Language: en
Supported: foo
Content-Type: application/vnd.syncml.ds.notification
Content-Length: (...)

[SyncML DS notification content]
```

After receiving the response from the terminal, the SIP/IP core network forwards the 200 OK message to the server. The "2xx" above is a response returned when the terminal responds to the Subscribe query request of the server correctly.
Step 10: Terminal 1 sends a Notify message that carries the found terminal capability information to the SIP/IP core network. The Notify message is shown in Table 25:

Table 25

```
NOTIFY sip:[6666::aaa:bbb:ccc:ddd]:1357;comp=sigcomp SIP/2.0
Via: SIP/2.0/UDP scscf.home.net;branch=z9hG4bK351g45.1
Via: SIP/2.0/UDP [5555::aaa:bbb:ccc:ddd]:1357;comp=sigcomp;branch=z9hG4bKnashds7
Max-Forwards: 70
P-Preferred-Identity: "John Doe" <sip:receiver_agent@home.net>
Privacy: none
From: <sip:receiver_agent@home.net>;tag=31415
To: <sip:sender_agent@home.net>;tag=151170
Call-ID: b89rjhnedlrfjflslj40a222
CSeq: 112 NOTIFY
Subscription-State: active;expires=600000
Event: ua-profile
Allow: INVITE, ACK, CANCEL, OPTIONS, BYE
Accept: application/vnd.syncml.ds.notification
Accept-Encoding: gzip
Accept-Language: en
Supported: foo
Content-Type: application/vnd.syncml.ds.notification
Contact: <sip: [6666::aaa:bbb:ccc:ddd]:1357;lr;comp=sigcomp>
Content-Length: (...)

[SyncML DS notification content]
```

In this step, terminal 1 may send a Notify message that carries the required terminal capability information to the server after finding the terminal capability information required by the server. The Event field in the Notify message indicates that the response is a ua-profile event package, and the Content-Type is the content type specified in the Subscribe message. In this process, terminal 1 may report its own capability information or capability information of other agents. The terminal capabilities may be indicated by an extended header field or described through relevant information in an XML file.

If the terminal capabilities are indicated by an extended header field, the CapReportFrom header field may be extended to indicate the terminal capabilities. For example, if the foregoing capability information comes from terminal 1 and terminal 1 reports the capability information through a Notify message, this header field is ignorable.

If terminal 1 reports the capability information through a Notify message but the reported capability information is the capability information of terminal 2, the header field needs to be expressed as:

CapReportFrom: <sip: [7777::aaa:bbb:ccc:ddd]:1357;lr;comp=sigcomp>.

If terminal 1 reports the capability information of terminal 1 and terminal 2 through a Notify message, the header field needs to be expressed as:

CapReportFrom: <sip: [7777::aaa:bbb:ccc:ddd]:1357;lr;comp=sigcomp>; <sip: [6666::aaa:bbb:ccc:ddd]:1357;lr;comp=sigcomp>.

Step 11: The SIP/IP core network forwards the Notify message to the server. The format of the forwarded Notify message is shown in Table 26:

Table 26

| NOTIFY sip:[5555::aaa:bbb:ccc:ddd]:1357;comp=sigcomp SIP/2.0 |
|---|
| Via: SIP/2.0/UDP [5555::aaa:bbb:ccc:ddd]:1357;comp=sigcomp;branch=z9hG4bKnashds7 |
| Max-Forwards: 69 |
| P-Preferred-Identity: "John Doe" <sip:receiver_agent@home.net> |
| Privacy: none |
| From: <sip:receiver_agent@home.net>;tag=31415 |
| To: <sip:sender_agent@home.net>;tag=151170 |
| Call-ID: b89rjhnedlrfjflslj40a222 |
| CSeq: 112 NOTIFY |
| Subscription-State: active;expires=600000 |
| Event: ua-profile |
| Allow: INVITE, ACK, CANCEL, OPTIONS, BYE |
| Accept: application/vnd.syncml.ds.notification |
| Accept-Encoding: gzip |
| Accept-Language: en |
| Supported: foo |
| Content-Type: application/vnd.syncml.ds.notification |
| Contact: <sip:psadm.home.net> |
| Content-Length: (...) |
| |
| [SyncML DS notification content] |

In this step, after receiving the Notify message from the terminal, the SIP/IP core network forwards it to the server. In the foregoing example, because terminal 1 stores the capability information of terminal 2 in the form of XML, the capability information of terminal 2 is described in XML. However, the capability information may be described in other forms such as ua-profile URL and User Agent. Although the XML format is given as an example here, it is the same with other formats of the capability information reported.

Step 12: The server updates the stored terminal capability information.

In this step, the server receives the terminal capability information sent by terminal 1. The server may find the required terminal capability information in the Notify message. Because the server subscribes to the terminal capability information through a Subscribe, the server does not believe that the Notify message sent from terminal 1 carries the capability information of terminal 1, but believes that the response to the Subscribe message carries the capability information required by the server.

After obtaining the terminal capability information, the server performs a normal SIP Push process, and pushes the content information of the service to be initiated by the server to terminal 2.

In this example, the request sent by the server to terminal 1 needs only to specify the terminal whose capability information is being queried, but does not need to specify the form of returning the capability information. The reported terminal capability information is stored in a third party in the form of User Agent or ua-profile, or in a message body in an XML format.

In this embodiment, the terminal preferred by the user may need to be authenticated and authorized when this terminal obtains the capability information of other terminals of the user; the third party's storing and reporting the capability information of other terminals may occur between terminals of different users, and, in this case, the authentication and authorization are mandatory.

The Subscribe/Notify message given above is only an example. It is the same with other messages through which the capability information is reported.

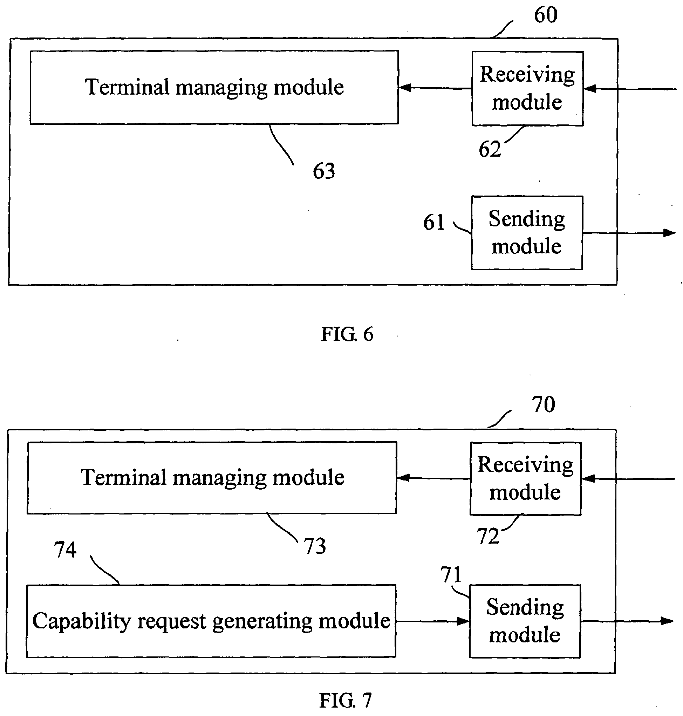

FIG. 6 shows a server that supports a SIP Push service in the first embodiment of the present invention. The server 60 includes:

> a sending module 61, adapted to send a terminal capability information request to a terminal;
> a receiving module 62, adapted to receive terminal capability information returned by the terminal according to the request; and
> a terminal managing module 63, adapted to manage terminal capabilities according to the received terminal capability information.

FIG. 7 shows a server that supports a SIP Push service in the second embodiment of the present invention. The server 70 includes:

> a capability request generating module 74, adapted to generate a terminal capability information request to be sent to the terminal after determining that the server does not store the terminal capability information or the terminal capability information stored in the server is incomplete;
> a sending module 71, adapted to send the terminal capability information request to the terminal;
> a receiving module 72, adapted to receive the terminal capability information returned by the terminal according to the request; and
> a terminal managing module 73, adapted to manage terminal capabilities according to the received terminal capability information.

In the two server embodiments above, if the terminal capability information from the receiving module is in the form of User Agent or a message body, and the server does not store the corresponding terminal capability information, the terminal managing module stores the terminal capability information directly; if the server already stores the corresponding terminal capability information, the terminal managing module updates the stored terminal capability information.

Besides, the terminal capability information from the receiving module may be in the form of ua-profile. In this case, the terminal managing module needs to interact with a profile server to obtain the specific terminal capability information.

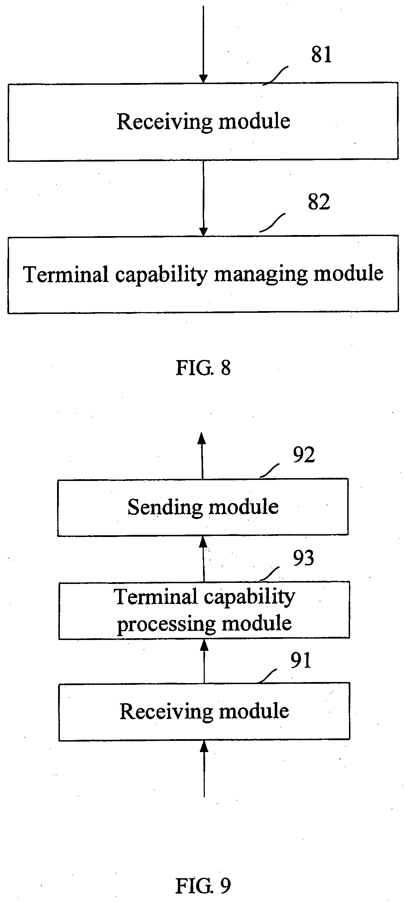

FIG. 8 shows a server that supports a SIP Push service in the third embodiment of the present invention. The server includes:

> a receiving module 81, adapted to receive capability information reported by the terminal, and send the received terminal capability information to a terminal managing module; and
> a terminal managing module 82, adapted to update stored terminal capability information according to the terminal capability information from the receiving module.

In this embodiment, if the capability information reported by the terminal is in the form of User Agent or a message body, the terminal managing module uses the reported capability information to update the stored terminal capability information directly.

If the terminal capability information reported by the terminal is in the form of ua-profile, the terminal managing module needs to interact with the profile server to obtain the specific terminal capability information.

In the three server embodiments above, the server may be a Push sender agent.

FIG. 9 shows a terminal that supports a SIP Push service in the first embodiment of the present invention. The terminal includes:

a receiving module 91, adapted to receive a terminal capability information request from a server, and transmit the request to a terminal capability information reporting module;

a terminal capability processing module 93, adapted to: obtain terminal capability information according to the received terminal capability information request, and transmit the obtained terminal capability information to the sending module; and

a sending module 92, adapted to: receive the terminal capability information from the terminal capability information reporting module, and send the terminal capability information to the server.

After receiving the terminal capability information request, the terminal capability processing module may obtain the terminal capability information directly, and transmit it to the sending module; or make a judgment and decide whether to obtain the corresponding terminal capability information and transmit it to the sending module.

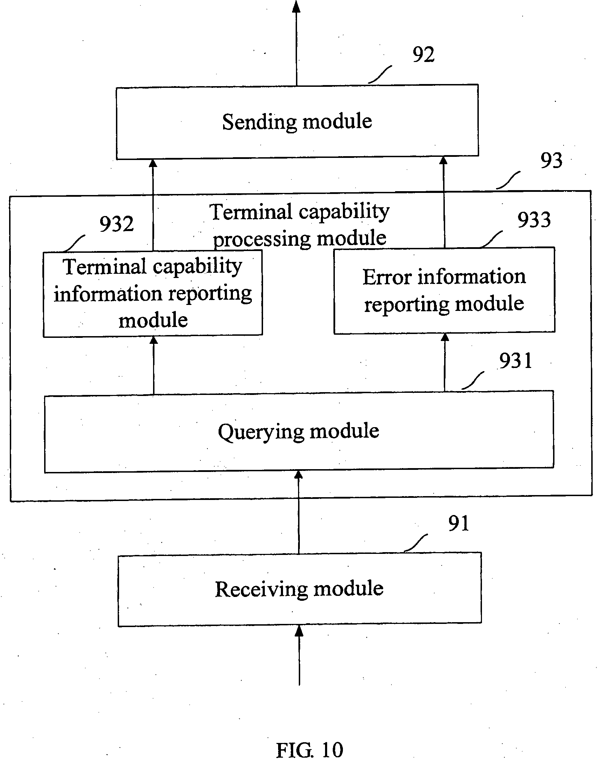

In the latter case, as shown in FIG. 10, the terminal capability processing module 93 may include:

a querying module 931, adapted to receive a terminal capability information request from a receiving module, check whether the corresponding terminal capability information is stored locally according to the request, and transmit the found terminal capability information to a terminal capability information reporting module, or notify an error information reporting module that no corresponding terminal capability information is found;

a terminal capability information reporting module 932, adapted to transmit the received terminal capability information to the sending module; and

an error information reporting module 933, adapted to: generate an error response according to the notification, and transmit the error response to the sending module.

Accordingly, the sending module forwards the error response from the error information reporting module to the server.

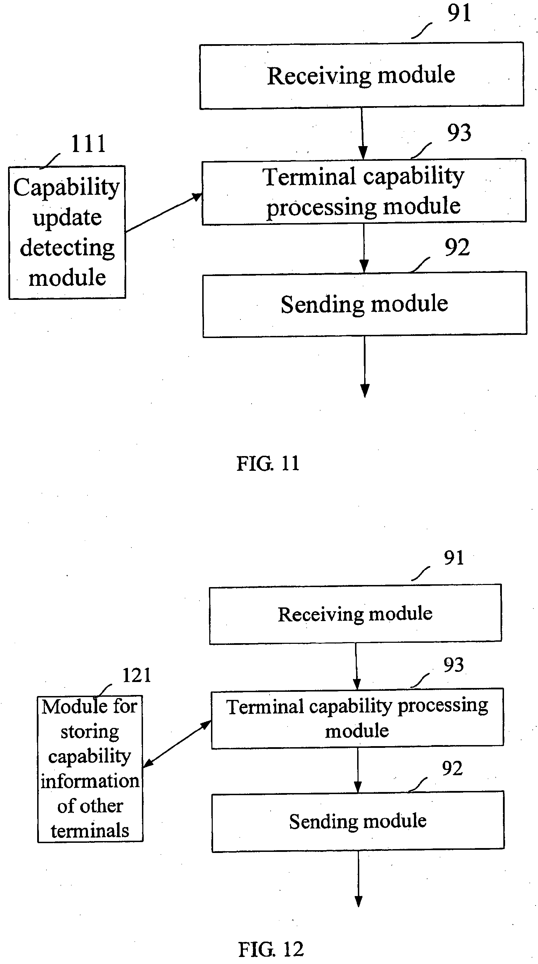

In this embodiment, the terminal may report updated capability information to the server once any capability of the terminal is changed. In this case, as shown in FIG. 11, the terminal further includes a capability updating monitoring module 111, which is adapted to: monitor whether the capability information is changed, and notify the terminal capability processing module once the capability information is changed. In this case, the terminal capability processing module obtains the current terminal capability information according to the notification and transmits it to the sending module.

In this embodiment, the requested terminal capability information is the capability information of this terminal.

If the requested terminal capability information is the capability information of another terminal, as shown in FIG. 12, the terminal further includes a module 121 for storing capability information of other terminals, which is adapted to store the capability information of other terminals. In this case, the terminal capability processing module is further adapted to: obtain terminal capability information from the module for storing capability information of other terminals according to the received terminal capability information request, and transmit the obtained terminal capability information to the sending module.

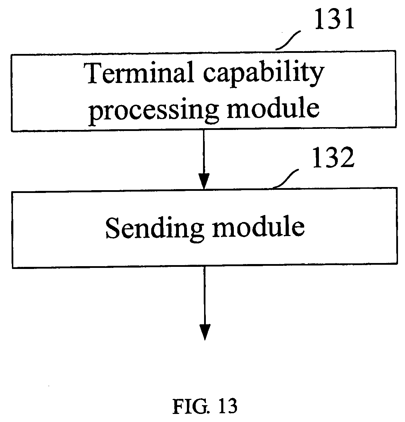

FIG. 13 shows a terminal that supports a SIP Push service in the second embodiment of the present invention. The terminal includes:

a terminal capability processing module 131, adapted to transmit changed terminal capability information to the sending module once the terminal capability information is changed; and

a sending module 132, adapted to: receive the terminal capability information from the terminal capability processing module, and send the terminal capability information to the server.

In the two terminal embodiments above, the terminal may be a Push receiver agent.

Described above are preferred embodiments of the present invention. In practice, those skilled in the art may make modifications to the method under the present invention in order to meet the specific requirements. Although the invention has been described through some exemplary embodiments, the invention is not limited to such embodiments.

## Claims

1. A terminal management method in a Push service, comprising:

   by a Push sender agent on a server side, sending a terminal capability information request to a terminal, needed to carry out a service; and
   receiving terminal capability information returned by the terminal, and managing terminal capabilities according to the terminal capability information;

wherein the terminal capability information request specifies a format of returning the terminal capability information and the returned terminal capability information complies with the format;

and wherein the specified format is one of the:

user agent-profile (ua-profile), User-Agent, or message body; and

a) if the terminal capability information is reported by the terminal in the ua-profile format, the managing of the terminal capability according to the terminal capability information further comprises:

interacting with a profile server according to the ua-profile reported by the terminal, btaining corresponding terminal capability information stored in the profile server, and storing the obtained terminal capability information, or updating terminal capability information stored locally according to the obtained terminal capability information; and

o
b) if the terminal capability information is reported by the terminal in the User-Agent format or the message body format the managing of the terminal capability according to the terminal capability information further comprises:

storing the reported terminal capability information, or updating the terminal capability information stored locally according to the reported terminal capability information.

2. The terminal management method in a Push service according to claim 1, wherein the step of sending of the terminal capability information request comprises:

sending the terminal capability information request to the terminal if determining that no terminal capability information of the terminal is stored locally or determining that the terminal capability information stored locally is incomplete.

3. The terminal management method in a Push service according to claim 2, wherein:

the terminal capability information request is carried in a Session Initiation Protocol, SIP, Options message, and therefore, the returned terminal capability information is carried in a 200 OK message.

4. The terminal management method in a Push service according to claim 2, wherein:

the terminal capability information request carries obtained terminal capability information, and therefore:

if the terminal capability information is reported by the terminal in the User-Agent format or the message body format, the returned terminal capability information is difference between the terminal capability information of the terminal and the terminal capability information carried in the request; and the managing on the terminal according to the terminal capability information is: updating the locally stored terminal capability information according to the difference.

5. The terminal management method in a Push service according to claim 1, wherein:

the terminal capability information request is sent through a Session Initiation Protocol, SIP, Subscribe message, and therefore the returned terminal capability information is carried in a SIP Notify message.

6. The terminal management method in a Push service according to claim 1, wherein after managing the terminal capabilities according to the terminal capability information, the method further comprises:

receiving the terminal capability information reported by the terminal after the terminal capability information is changed; and updating locally stored terminal capability information according to the terminal capability information reported after the change.

**7.** The terminal management method in a Push service according to claim 3 or claim 5, wherein:

the terminal capability information request is set in an Event item of the SIP Options message or SIP Subscribe message, or set in a capability query header field added in the SIP Options message or SIP Subscribe message.

**8.** The terminal management method in a Push service according to claim 7, wherein:

values of the header field comprise: full, differ, customize, and none; and if the terminal capability information is reported by the terminal in the User-Agent format or the message body format, the method further comprises:

if the value of the header field is "full", the request requires the terminal to report all capability information; if the value of the header field is "differ", the request requires the terminal to check difference between the locally stored terminal capability information and terminal capability information stored in a network server, and report the difference; if the value of the header field is "customize", the request requires the terminal to input the terminal capability information into a terminal capability information table delivered by a server, and submit the table; and if the value of the header field is "none", it is not necessary to report the terminal capability information according to this header field.

**9.** The terminal management method in a Push service according to claim 1, wherein after the terminal receives the request and reports its terminal capability information to the Push sender agent according to the request, the method further comprises:

by the terminal, reporting changed terminal capability information to the Push sender agent once its capability information is changed.

**10.** A Push sender agent on a server side (60, 70) supporting a Push service, comprising:

a sending module(61, 71), adapted to send a terminal capability information request to a terminal, needed to carry out a service;
a receiving module (62, 72), adapted to receive terminal capability information returned by the terminal according to the request; and
a terminal managing module (63, 73), adapted to manage terminal capabilities according to the received terminal capability information;
wherein the terminal capability information request specifies a format of returning the terminal capability information and the returned terminal capability information complies with the format;

and wherein the specified format is one of the:

user agent-profile (ua-profile), User-Agent, or message body; and

a) if the terminal capability information is reported by the terminal in the ua-profile format, the Push sender agent is adapted to interact with a profile server according to the ua-profile reported by the terminal, obtain corresponding terminal capability information stored in the profile server, and store the obtained terminal capability information, or update terminal capability information stored locally according to the obtained terminal capability information; and
b) if the terminal capability information is reported by the terminal in the User-Agent format or the message body format, the Push sender agent is adapted to store the reported terminal capability information, or update the terminal capability information stored locally according to the reported terminal capability information.

**11.** The Push sender agent supporting a Push service according to claim 10, further comprising:

a capability request generating module (74), adapted to generate the terminal capability information request to be sent to the terminal if determining that no terminal capability information of the terminal is stored locally or determining that the terminal capability information stored locally is incomplete.

**Patentansprüche**

1. Verfahren zur Verwaltung eines Endgeräts in einem Push-Dienst, umfassend:

   Senden an ein Endgerät, das zum Ausführen eines Dienstes benötigt wird, einer Anfrage in Bezug auf Informationen über Eigenschaften des Endgeräts durch einen Push-Sender-Agent auf einer Server-Seite, und Empfangen der von dem Endgerät zurückgesendeten Informationen über Eigenschaften des Endgeräts und Verwalten von Eigenschaften des Endgeräts gemäß den Informationen über Eigenschaften des Endgeräts; wobei die Anfrage in Bezug auf Informationen über Eigenschaften des Endgeräts ein Format zum Zurücksenden der Informationen über Eigenschaften des Endgeräts spezifiziert und die zurückgesendeten Informationen über Eigenschaften des Endgeräts mit dem Format übereinstimmen;

   und wobei das spezifizierte Format eines der Folgenden ist:

   ein User-Agent-Profil (ua-Profil), ein User-Agent oder ein Nachrichtenkörper; und

   a) wenn die Informationen über Eigenschaften des Endgeräts von dem Endgerät in dem ua-Profil-Format gemeldet werden, umfasst das Verwalten der Eigenschaft des Endgeräts gemäß den Informationen über Eigenschaften des Endgeräts ferner: Interagieren mit einem Profil-Server gemäß dem ua-Profil, das von dem Endgerät gemeldet wurde,
   Erhalten entsprechender Informationen über Eigenschaften des Endgeräts, die in dem Profil-Server gespeichert sind, und
   Speichern der erhaltenen Informationen über Eigenschaften des Endgeräts oder Aktualisieren der lokal gespeicherten Informationen über Eigenschaften des Endgeräts gemäß den erhaltenen Informationen über Eigenschaften des Endgeräts; und
   b) wenn die Informationen über Eigenschaften des Endgeräts von dem Endgerät in dem User-Agent-Format oder dem Nachrichtenkörper-Format gemeldet werden, umfasst das Verwalten der Eigenschaft des Endgeräts gemäß den Informationen über Eigenschaften des Endgeräts ferner:

   Speichern der gemeldeten Informationen über Eigenschaften des Endgeräts oder Aktualisieren der lokal gespeicherten Informationen über Eigenschaften des Endgeräts gemäß den gemeldeten Informationen über Eigenschaften des Endgeräts.

2. Verfahren zur Verwaltung eines Endgeräts in einem Push-Dienst nach Anspruch 1, wobei der Schritt des Sendens der Anfrage in Bezug auf Informationen über Eigenschaften des Endgeräts umfasst:

   Senden der Anfrage in Bezug auf Informationen über Eigenschaften des Endgeräts an das Endgerät, wenn bestimmt wird, dass keine Informationen über Eigenschaften des Endgeräts lokal gespeichert sind, oder wenn bestimmt wird, dass die lokal gespeicherten Informationen über Eigenschaften des Endgeräts unvollständig sind.

3. Verfahren zur Verwaltung eines Endgeräts in einem Push-Dienst nach Anspruch 2, wobei:

   die Anfrage in Bezug auf Informationen über Eigenschaften des Endgeräts in einer Sitzungsaufbauprotokoll(SIP, "Session Initiation Protocol")-Optionsnachricht transportiert wird, und daher die zurückgesendeten Informationen über Eigenschaften des Endgeräts in einer 200 OK-Nachricht transportiert werden.

4. Verfahren zur Verwaltung eines Endgeräts in einem Push-Dienst nach Anspruch 2, wobei:

   die Anfrage in Bezug auf Informationen über Eigenschaften des Endgeräts erhaltene Informationen über Eigenschaften des Endgeräts transportiert, und daher:

   wenn die Informationen über Eigenschaften des Endgeräts von dem Endgerät in dem User-Agent-Format oder dem Nachrichtenkörper-Format gemeldet werden, die zurückgesendeten Informationen über Eigenschaften des Endgeräts eine Differenz zwischen den Endgeräteigenschaftsinformationen des Endgeräts und den in der Anfrage transportierten Informationen über Eigenschaften des Endgeräts sind; und
   das Verwalten des Endgeräts gemäß den Informationen über Eigenschaften des Endgeräts Folgendes ist:

   Aktualisieren der lokal gespeicherten Informationen über Eigenschaften des Endgeräts gemäß der Differenz.

**5.** Verfahren zur Verwaltung eines Endgeräts in einem Push-Dienst nach Anspruch 1, wobei:

die Anfrage in Bezug auf Informationen über Eigenschaften des Endgeräts durch eine Sitzungsaufbauprotokoll(SIP)-Anmeldenachricht gesendet wird, und daher die zurückgesendeten Informationen über Eigenschaften des Endgeräts in einer SIP-Meldenachricht transportiert werden.

**6.** Verfahren zur Verwaltung eines Endgeräts in einem Push-Dienst nach Anspruch 1, wobei nach dem Verwalten der Eigenschaften des Endgeräts gemäß den Informationen über Eigenschaften des Endgeräts das Verfahren ferner umfasst:

Empfangen der Informationen über Eigenschaften des Endgeräts, die von dem Endgerät gemeldet wurden, nachdem die Informationen über Eigenschaften des Endgeräts geändert wurden; und
Aktualisieren der lokal gespeicherten Informationen über Eigenschaften des Endgeräts gemäß den gemeldeten Informationen über Eigenschaften des Endgeräts nach der Änderung.

**7.** Verfahren zur Verwaltung eines Endgeräts in einem Push-Dienst nach Anspruch 3 oder Anspruch 5, wobei:

die Anfrage in Bezug auf Informationen über Eigenschaften des Endgeräts in einem Ereigniselement der SIP-Optionsnachricht oder SIP-Anmeldenachricht eingestellt wird oder in einem Eigenschaftsanfragen-Header-Feld eingestellt wird, das in der SIP-Optionsnachricht oder der SIP-Anmeldenachricht hinzugefügt wird.

**8.** Verfahren zur Verwaltung eines Endgeräts in einem Push-Dienst nach Anspruch 7, wobei:

Werte des Header-Felds umfassen: vollständig, unterschiedlich, anpassen und nichts;
und das Verfahren, wenn die Informationen über Eigenschaften des Endgeräts von dem Endgerät in dem User-Agent-Format oder dem Nachrichtenkörper-Format gemeldet werden, umfasst:

wenn der Wert des Header-Felds "vollständig" ist, erfordert die Anfrage, dass das Endgerät sämtliche Eigenschaftsinformationen meldet; wenn der Wert des Header-Felds "unterschiedlich" ist, erfordert die Anfrage, dass das Endgerät einen Unterschied zwischen den lokal gespeicherten Informationen über Eigenschaften des Endgeräts und den Informationen über Eigenschaften des Endgeräts, die in einem Netzwerk-Server gespeichert sind, prüft, und den Unterschied meldet; wenn der Wert des Header-Felds "anpassen" ist, erfordert die Anfrage, dass das Endgerät die Informationen über Eigenschaften des Endgeräts in eine Endgeräteeigenschaftsinformationstabelle eingibt, die von einem Server geliefert wird, und die Tabelle absendet; und wenn der Wert des Header-Felds "nichts" ist, ist es nicht notwendig, die Informationen über Eigenschaften des Endgeräts gemäß diesem Header-Feld mitzuteilen.

**9.** Verfahren zur Verwaltung eines Endgeräts in einem Push-Dienst nach Anspruch 1, wobei, nachdem das Endgerät die Anfrage empfängt und seine Informationen über Eigenschaften des Endgeräts dem Push-Sender-Agent gemäß der Anfrage meldet, das Verfahren ferner umfasst:

Melden durch das Endgerät geänderter Informationen über Eigenschaften des Endgeräts an den Push-Sender-Agent, sobald seine Eigenschaftsinformationen geändert werden.

**10.** Push-Sender-Agent auf einer Server-Seite (60, 70), der einen Push-Dienst unterstützt, umfassend:

ein Sendemodul (61, 71), das angepasst ist, um eine Anfrage in Bezug auf Informationen über Eigenschaften des Endgeräts an ein Endgerät zu senden, das zum Ausführen eines Dienstes benötigt wird,
ein Empfangsmodul (62, 72), das angepasst ist, um Informationen über Eigenschaften des Endgeräts zu empfangen, die von dem Endgerät gemäß der Anfrage zurückgesendet wurden; und
ein Endgerätverwaltungsmodul (63, 73), das angepasst ist, um Eigenschaften des Endgeräts gemäß den empfangenen Informationen über Eigenschaften des Endgeräts zu verwalten;
wobei die Anfrage in Bezug auf Informationen über Eigenschaften des Endgeräts ein Format zum Zurücksenden der Informationen über Eigenschaften des Endgeräts spezifiziert und die zurückgesendeten Informationen über Eigenschaften des Endgeräts mit dem Format übereinstimmen;

und wobei das spezifizierte Format eines der Folgenden ist:

User-Agent-Profil (ua-Profil), User-Agent oder Nachrichtenkörper; und

a) wenn die Informationen über Eigenschaften des Endgeräts von dem Endgerät in dem ua-Profil-Format gemeldet werden, wird der Push-Sender-Agent angepasst, um mit einem Profil-Server gemäß dem von dem Endgerät gemeldeten ua-Profil zu interagieren, entsprechende Informationen über Eigenschaften des Endgeräts zu erhalten, die in dem Profil-Server gespeichert sind, und die erhaltenen Informationen über Eigenschaften des Endgeräts zu speichern oder lokal gespeicherte Informationen über Eigenschaften des Endgeräts gemäß den erhaltenen Informationen über Eigenschaften des Endgeräts zu aktualisieren; und
b) wenn die Informationen über Eigenschaften des Endgeräts von dem Endgerät in dem User-Agent-Format oder dem Nachrichtenkörper-Format gemeldet werden, wird der Push-Sender-Agent angepasst, um die gemeldeten Informationen über Eigenschaften des Endgeräts zu speichern oder die lokal gespeicherten Informationen über Eigenschaften des Endgeräts gemäß den gemeldeten Informationen über Eigenschaften des Endgeräts zu aktualisieren.

**11.** Push-Sender-Agent, der einen Push-Dienst unterstützt, nach Anspruch 10, ferner umfassend:

ein Eigenschaftsanfragenerzeugungsmodul (74), das angepasst ist, um die an das Endgerät zu sendende Anfrage in Bezug auf Informationen über Eigenschaften des Endgeräts zu erzeugen, wenn bestimmt wird, dass keine Informationen über Eigenschaften des Endgeräts lokal gespeichert sind, oder wenn bestimmt wird, dass die lokal gespeicherten Informationen über Eigenschaften des Endgeräts unvollständig sind.

**Revendications**

**1.** Procédé de gestion de terminaux dans un service de données poussées (Push), comprenant :

l'envoi, par un agent expéditeur de données poussées du côté serveur, d'une requête d'information de capacité de terminal à un terminal, nécessaire à la mise en oeuvre d'un service, et
la réception de l'information de capacité de terminal renvoyée par le terminal, et la gestion de la capacité du terminal en fonction de l'information de capacité du terminal ;
dans lequel la requête d'information de capacité de terminal spécifie un format de renvoi de l'information de capacité de terminal, et l'information de capacité de terminal renvoyée respecte le format ;

et dans lequel le format spécifié est l'un parmi :

un profil utilisateur-agent (profil ua), un utilisateur-agent, et un corps de message ; et

a) si l'information de capacité de terminal est rapportée par le terminal dans le format de profil ua, la gestion de la capacité de terminal en fonction de l'information de capacité de terminal comprend en outre :

l'interaction avec un serveur de profil en fonction du profil ua rapporté par le terminal,
l'obtention de l'information de capacité de terminal correspondante stockée dans le serveur de profil, et
le stockage de l'information de capacité de terminal obtenue, ou la mise à jour de l'information de capacité de terminal stockée localement en fonction de l'information de capacité de terminal obtenue ; et

b) si l'information de capacité de terminal est rapportée par le terminal dans le format utilisateur-agent ou le format de corps de message, la gestion de la capacité de terminal en fonction de l'information de capacité de terminal comprend en outre :

le stockage de l'information de capacité de terminal rapportée, ou la mise à jour de l'information de capacité de terminal stockée localement en fonction de l'information de capacité de terminal rapportée.

**2.** Procédé de gestion de terminal dans un service de données poussées selon la revendication 1, dans lequel l'étape d'envoi de la requête d'information de capacité de terminal comprend :

l'envoi au terminal de la requête d'information de capacité de terminal s'il est déterminé qu'aucune information de capacité de terminal du terminal n'est stockée localement, ou s'il est déterminé que l'information de capacité de terminal stockée localement est incomplète.

**3.** Procédé de gestion de terminal dans un service de données poussées selon la revendication 2, dans lequel :

la requête d'information de capacité de terminal est transportée dans un message Options de protocole d'initiation de session, SIP, et par conséquent l'information de capacité de terminal renvoyée est transportée dans un message 200 OK.

**4.** Procédé de gestion de terminal dans un service de données poussées selon la revendication 2, dans lequel :

la requête d'information de capacité de terminal transporte l'information de capacité de terminal obtenue, et par conséquent :

si l'information de capacité de terminal est rapportée par le terminal dans le format utilisateur-agent ou le format de corps de message, l'information de capacité de terminal renvoyée est la différence entre l'information de capacité de terminal du terminal et l'information de capacité de terminal transportée dans la requête ; et
la gestion sur le terminal en fonction de l'information de capacité de terminal est : la mise à jour de l'information de capacité de terminal stockée localement en fonction de la différence.

**5.** Procédé de gestion de terminal dans un service de données poussées selon la revendication 1, dans lequel :

la requête d'information de capacité de terminal est envoyée par l'intermédiaire d'un message Subscribe (souscription) de protocole d'initiation de session, SIP, et par conséquent l'information de capacité de terminal renvoyée est transportée dans un message Notify (notification) de SIP.

**6.** Procédé de gestion de terminal dans un service de données poussées selon la revendication 1, dans lequel, après la gestion des capacités de terminal en fonction de l'information de capacité de terminal, le procédé comprend en outre :

la réception de l'information de capacité de terminal rapportée par le terminal après que l'information de capacité de terminal a été changée ; et
la mise à jour de l'information de capacité de terminal stockée localement en fonction de l'information de capacité de terminal rapportée après le changement.

**7.** Procédé de gestion de terminal dans un service de données poussées selon la revendication 3 ou la revendication 5, dans lequel :

la requête d'information de capacité de terminal est établie dans un item Event (événement) du message Options de SIP ou du message Subscribe de SIP, ou établie dans un champ d'en-tête de demande de capacité ajouté au message Options de SIP ou au message Subscribe de SIP.

**8.** Procédé de gestion de terminal dans un service de données poussées selon la revendication 7, dans lequel :

les valeurs du champ d'en-tête comprennent : full (plein), differ (différer), customize (customiser), et none (aucun) ; et si l'information de capacité de terminal est rapportée par le terminal dans le format utilisateur-agent ou le format de corps de message, le procédé comprend en outre :

si la valeur du champ d'en-tête est "full", la requête requiert que le terminal rapporte toute l'information de capacité ; si la valeur du champ d'en-tête est "differ", la requête requiert que le terminal vérifie la différence entre l'information de capacité de terminal stockée localement et l'information de capacité de terminal stockée dans un serveur réseau, et rapporte la différence ; si la valeur du champ d'en-tête est "customize", la requête requiert que le terminal entre l'information de capacité de terminal dans une table d'information de capacité de terminal délivrée par un serveur, et soumette la table ; et si la valeur du champ d'en-tête est "none", il n'est pas nécessaire de rapporter l'information de capacité de terminal conformément à ce champ d'en-tête.

**9.** Procédé de gestion de terminal dans un service de données poussées selon la revendication 1, dans lequel, après que le terminal a reçu la requête et a rapporté son information de capacité de terminal à l'agent expéditeur de données poussées en fonction de la requête, le procédé comprend en outre :

le rapport par le terminal de l'information de capacité de terminal changée à l'agent expéditeur de données poussées une fois que l'information de capacité a été changée.

10. Agent expéditeur de données poussées du côté serveur (60, 70) supportant un service de données poussées, comprenant :

un module d'envoi (61, 71) adapté pour envoyer une requête d'information de capacité de terminal à un terminal, nécessaire à la mise en oeuvre d'un service ;
un module de réception (62, 72) adapté pour recevoir l'information de capacité de terminal renvoyée par le terminal conformément à la requête ; et
un module de gestion de terminal (63, 73) adapté pour gérer les capacités du terminal en fonction de l'information de capacité de terminal reçue ;
dans lequel la requête d'information de capacité de terminal spécifie un format de renvoi de l'information de capacité de terminal et l'information de capacité de terminal renvoyée respecte le format ;
et dans lequel le format spécifié est l'un parmi :

un profil utilisateur-agent (profil ua), un utilisateur-agent, et un corps de message ; et

a) si l'information de capacité de terminal est rapportée par le terminal dans le format de profil ua, l'agent expéditeur de données poussées est adapté pour interagir avec un serveur de profil en fonction du profil ua rapporté par le terminal, obtenir l'information de capacité de terminal correspondante stockée dans le serveur de profil, et stocker l'information de capacité de terminal obtenue, ou mettre à jour l'information de capacité de terminal stockée localement en fonction de l'information de capacité de terminal obtenue ; et
b) si l'information de capacité de terminal est rapportée par le terminal dans le format utilisateur-agent ou le format de corps de message, l'agent expéditeur de données poussées est adapté pour stocker l'information de capacité de terminal rapportée, ou mettre à jour l'information de capacité de terminal stockée localement en fonction de l'information de capacité de terminal rapportée.

11. Agent expéditeur de données poussées supportant un service de données poussées selon la revendication 10, comprenant en outre :

un module de génération de requête de capacité (74) adapté pour générer la requête d'information de capacité de terminal devant être envoyée au terminal s'il est déterminé qu'aucune information de capacité de terminal du terminal n'est stockée localement, ou s'il est déterminé que l'information de capacité de terminal stockée localement est incomplète.

FIG. 1

Push sender agent          SIP/IP core network          Push receiver agent

(2) SIP Subscribe (event: ua-profile server information)    (1) SIP Subscribe (event: ua-profile server information)

(3) 200 OK          (4) 200 OK

FIG. 2

Push sender agent · · · · · · · SIP/IP core network · · · · · · · Push receiver agent

(1) SIP Options request

(2) SIP Options request

(3) The terminal locally queries the capability information required by the PPG

(5) 404 failure response

(4) 404 failure response

(8) The PPG updates the currently stored terminal capability information

(7) 200 OK (terminal capability information)

(6) 200 OK (terminal capability information)

FIG. 3

Push sender agent · · · · · · · SIP/IP core network · · · · · · · Push receiver agent

Registration request

Registration request

200 OK

200 OK

(1) Subscribe message (terminal capability information request)

(2) Subscribe message (terminal capability information request)

(5) The terminal checks for change of its capabilities

(10) The PPG updates the currently stored terminal capability information

(4) 200 OK

(3) 200 OK

(7) 404 error message

(6) 404 error message

Notify message (terminal capability information request)

Notify message (terminal capability information request)

(11) 200 OK

(12) 200 OK

Notify message

Notify message

200 OK

200 OK

FIG. 4

Push sender agent | SIP/IP core network | Push receiver agent 1 | Push receiver agent 2

Registration request

Registration request

200   OK

200   OK

Registration request

Registration request

200 OK

200 OK

(1) Subscribe message (RA2 capability information)

(2) Subscribe message (RA2 capability information)

(3) Subscribe message (RA2 capability information)

(4) Subscribe message (RA2 capability information)

(7) 404 error message

(5) Push receiver agent 1 checks for the stored capability information of Push receiver agent 2

(6) 404 error message

(8) 200 OK

(12) The server updates the currently stored terminal capability information

(9) 200 OK

(10) Notify message (RA2 capability information)

(11) Notify message (RA2 capability information)

FIG. 5

60

Terminal managing module

Receiving module

62

63

61

Sending module

FIG. 6

70

Terminal managing module

Receiving module

72

74

73

Capability request generating module

71

Sending module

FIG. 7

81

Receiving module

82

Terminal capability managing module

FIG. 8

92

Sending module

93

Terminal capability
processing module

91

Receiving module

FIG. 9

FIG. 10

**91**

Receiving module

**111**

Capability update detecting module

**93**

Terminal capability processing module

**92**

Sending module

FIG. 11

**91**

Receiving module

**121**

Module for storing capability information of other terminals

**93**

Terminal capability processing module

**92**

Sending module

FIG. 12

131

Terminal capability
processing module

132

Sending module

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006179115 A1